(19) Europäisches Patentamt
European Patent Office
Office européen des brevets

(11) **EP 4 672 749 A1**

(12) **EUROPEAN PATENT APPLICATION**
published in accordance with Art. 153(4) EPC

(43) Date of publication:
**31.12.2025 Bulletin 2026/01**

(21) Application number: **24835090.2**

(22) Date of filing: **29.03.2024**

(51) International Patent Classification (IPC):
**H04N 19/159** (2014.01)

(52) Cooperative Patent Classification (CPC):
**H04N 19/124; H04N 19/13; H04N 19/159;**
**H04N 19/182; H04N 19/20**

(86) International application number:
**PCT/CN2024/084729**

(87) International publication number:
**WO 2025/007603 (09.01.2025 Gazette 2025/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **03.07.2023 CN 202310807774**

(71) Applicant: **ZTE Corporation**
**Shenzhen, Guangdong 518057 (CN)**

(72) Inventors:
• **MA, Siwei**
**Shenzhen, Guangdong 518057 (CN)**

• **ZHANG, Jiaqi**
**Shenzhen, Guangdong 518057 (CN)**
• **FU, Jiaye**
**Shenzhen, Guangdong 518057 (CN)**
• **JIA, Chuanmin**
**Shenzhen, Guangdong 518057 (CN)**
• **WANG, Shanshe**
**Shenzhen, Guangdong 518057 (CN)**
• **GAO, Ying**
**Shenzhen, Guangdong 518057 (CN)**
• **HUANG, Cheng**
**Shenzhen, Guangdong 518057 (CN)**

(74) Representative: **Ziebig Hengelhaupt Intellectual**
**Property Attorneys**
**Patentanwaltskanzlei PartGmbB**
**Leipziger Straße 49**
**10117 Berlin (DE)**

(54) **INTRA PREDICTION CODING METHOD, INTRA PREDICTION DECODING METHOD, COMMUNICATION APPARATUS, AND STORAGE MEDIUM**

(57) The present application relates to the technical field of video coding, and disclosed thereby are an intra prediction coding method, an intra prediction decoding method, a communication apparatus, and a storage medium. Coding and decoding of high order intra prediction on a video image frame can be performed. The method comprises: generating bitstream information of a video image frame, the bitstream information of the video image frame comprising first indication information corresponding to a target primary angle prediction mode and second indication information corresponding to a target extended angle prediction mode, and the target primary angle prediction mode and the target extended angle prediction mode being angle prediction modes used to perform high order intra prediction on pixels to be predicted in a prediction unit in the video image frame; and sending the bitstream information of the video image frame to a decoding end.

The coding end sends the bitstream information of the video image frame to a decoding end — Step 302

FIG. 3

**Description**

The present disclosure claims a priority to Chinese Patent Application No. 202310807774.4, and filed on July 03, 2023, the entire content of which is incorporated into the present application by reference.

TECHNICAL FIELD

The present disclosure relates to the field of video coding technologies, and in particular, to an intra prediction encoding method and an intra prediction decoding method, a communication apparatus, and a storage medium.

BACKGROUND

In a current intra prediction process, when a pixel value of a to-be-predicted pixel in a prediction unit is predicted in a one-dimensional projection prediction scheme, since a projection path of a reference pixel is a straight line, the prediction accuracy is high when a linear texture image is predicted, but the prediction accuracy is low for a non-linear texture image.

In order to solve the problem of low prediction accuracy of one-dimensional projection prediction for the non-linear texture image, a high order intra prediction (HOIP) technology is proposed in the relevant technology, where the reference pixel may be predicted by a non-linear projection function, and the projection path of the reference pixel is a non-linear projection function curve, which can accurately predict the pixel value of the non-linear texture image. Therefore, how to code the video image frame using the HOIP technology has become a technical problem that needs to be solved urgently.

SUMMARY

Embodiments of the present disclosure provide an intra prediction encoding method and intra prediction decoding method, a communication apparatus and a storage medium, which can perform coding of the high order intra prediction on a video image frame.

In an aspect, an intra prediction encoding method is provided, and includes:

generating bitstream information of a video image frame, where the bitstream information of the video image frame includes first indication information corresponding to a target primary angular prediction mode and second indication information corresponding to a target extended angular prediction mode, and the target primary angular prediction mode and the target extended angular prediction mode are angular prediction modes for performing a high order intra prediction on a to-be-predicted pixel in a prediction unit in the video image frame; and

sending the bitstream information of the video image frame to a decoder.

In another aspect, an intra prediction decoding method is provided, and includes:

receiving bitstream information of a video image frame, where the bitstream information of the video image frame includes first indication information corresponding to a target primary angular prediction mode and second indication information corresponding to a target extended angular prediction mode, and the target primary angular prediction mode and the target extended angular prediction mode are angular prediction modes for performing a high order intra prediction on a to-be-predicted pixel in a prediction unit in the video image frame;

determining the target primary angular prediction mode based on the first indication information; and

determining the target extended angular prediction mode based on the second indication information.

In yet another aspect, an intra prediction encoding apparatus is provided, and includes: a processing unit and a communication unit;

the processing unit is configured to generate bitstream information of a video image frame, where the bitstream information of the video image frame includes first indication information corresponding to a target primary angular prediction mode and second indication information corresponding to a target extended angular prediction mode, and the target primary angular prediction mode and the target extended angular prediction mode are angular prediction modes for performing a high order intra prediction on a to-be-predicted pixel in a prediction unit in the video image frame; and

the communication unit is configured to send the bitstream information of the video image frame to a decoder.

In yet another aspect, an intra prediction decoding apparatus is provided, and includes: a processing unit and a communication unit;

the communication unit is configured to receive bitstream information of a video image frame, where the bitstream information of the video image frame includes first indication information corresponding to a target primary angular prediction mode and second indication information corresponding to a target extended angular prediction mode, and the target primary angular prediction mode and the target extended angular prediction mode are angular prediction modes for performing a high order intra prediction on a to-be-predicted pixel in a prediction unit in the video image frame;

the processing unit is configured to determine the target primary angular prediction mode based on the first indication information; and

the processing unit is further configured to determine the target extended angular prediction mode based on the second indication information.

In yet another aspect, a communication apparatus is provided, and includes: a memory and a processor; the memory is coupled with the processor; the memory is configured to store a computer program; and the processor, when executing the computer program, implements the method described in any one of the above aspects.

In yet another aspect, a computer readable storage medium is provided and the computer readable storage medium has stored computer program instructions thereon, and the computer program instructions, when executed by a processor, implement the method described in any one of the above aspects.

In yet another aspect, a computer program product is provided, the computer program product includes computer program instructions, and the computer program instructions, when executed by a processor, implement the method described in any one of the above aspects.

In the embodiments of the present disclosure, the encoder, when generating the bitstream information of the video image frame, encodes the target primary angular prediction mode and the target extended angular prediction mode used for the high order intra prediction, and sends a bitstream including encoding information of the target primary angular prediction mode and the target extended angular prediction mode to the decoder. In this way, the decoder, after receiving the bitstream, may decode the encoding information of the target primary angular prediction mode and the target extended angular prediction mode, thereby realizing the high order intra prediction for the video image.

BRIEF DESCRIPTION OF THE DRAWINGS

In order to illustrate technical solutions in the present disclosure more clearly, the drawings that some embodiments of the present disclosure need to use, will be briefly introduced below, and obviously, the drawings in the following description are merely drawings of some embodiments of the present disclosure, and other drawings may also be obtained according to these drawings for the ordinary skilled in the art.

FIG. 1 is a schematic diagram of a projection path of a reference pixel in a one-dimensional projection prediction process, provided in some embodiments of the present disclosure.

FIG. 2 is a schematic diagram of a projection path of a reference pixel in a quadratic function projection prediction process, provided in some embodiments of the present disclosure.

FIG. 3 is a schematic flowchart of an intra prediction encoding method, provided in some embodiments of the present disclosure.

FIG. 4 is a schematic flowchart of another intra prediction encoding method, provided in some embodiments of the present disclosure.

FIG. 5 is a schematic flowchart of another intra prediction encoding method, provided in some embodiments of the present disclosure.

FIG. 6 is a schematic flowchart of another intra prediction encoding method, provided in some embodiments of the present disclosure.

FIG. 7 is a schematic flowchart of another intra prediction encoding method, provided in some embodiments of the present disclosure.

FIG. 8 is a schematic flowchart of an intra prediction decoding method, provided in some embodiments of the present disclosure.

FIG. 9 is a schematic flowchart of another intra prediction decoding method, provided in some embodiments of the present disclosure.

FIG. 10 is a structural schematic diagram of a communication apparatus, provided in some embodiments of the present disclosure.

FIG. 11 is a structural schematic diagram of another communication apparatus, provided in some embodiments of the present disclosure.

FIG. 12 is a structural schematic diagram of another communication apparatus, provided in some embodiments of the present disclosure.

DETAILED DESCRIPTION

The following will describe the technical solutions in the present disclosure clearly and completely, in conjunction with the drawings in the present disclosure, and obviously, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

It should be noted that in the present disclosure, terms such as "exemplary/exemplarily" or "for example" are used to represent examples, illustrations, or descriptions. Any embodiment or design solution described with "exemplary/exemplarily" or "for example" should not be interpreted as being more preferred or advantageous than other embodiments or design solutions. Specifically, the use of the terms such as "exemplary/exemplarily" or "for example", etc., is intended to present related concepts in a specific manner.

Hereinafter, the terms such as "first", "second", etc., are used only for descriptive purposes and cannot be construed as indicating or implying relative importance or implicitly indicating the number of the indicated technical features. Thus, features limited with "first", "second", etc., may explicitly or implicitly include one or more of the features.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represents three cases: only A, A and B, and only B. Additionally, "at least one" means one or more, and "multiple/plurality of" means two or more.

Intra prediction refers to the process of predicting a pixel value of a to-be-predicted pixel in a prediction unit that is spatially adjacent to a reference pixel by a pixel value of the reference pixel in a video image frame. Intra prediction may effectively reduce spatial redundancy in the video image frame and improve the transmission efficiency and coding efficiency of the video image frame.

It should be noted that, the pixel recorded in the present disclosure may be a pixel point, a pixel block, or other forms of pixels, which is not limited to the present disclosure.

During the intra prediction, a one-dimensional projection prediction scheme is usually used to predict a pixel value of each pixel in the prediction unit, and the process may be implemented by the following Step 1 to Step 3.

Step 1, an encoder determines a position of a to-be-predicted pixel in a prediction unit and an angular prediction mode.

In a versatile video coding (VVC) scheme, angular prediction modes for the intra prediction include a total of 67 modes, including planar (Planar), direct current (DC) and 65 other angular prediction modes. A same angular prediction mode is used for each to-be-predicted pixel in a same prediction unit. Each mode corresponds to an angle of the intra prediction mode.

Step 2, the encoder calculates a position of any pixel to be predicted in the prediction unit and the angular prediction mode based on a first-order function, to determine a position of a reference pixel corresponding to the to-be-predicted pixel.

In some embodiments, in a vertical prediction mode, the encoder may determine the position of the reference pixel based on Formula 1 as follows.

$$c_1 = x_0 - tan\alpha * y_0 \qquad\qquad \text{Formula 1}$$

Herein, $c_1$ is a horizontal ordinate of the reference pixel, $x_0$ is a horizontal ordinate of the to-be-predicted pixel, $y_0$ is a vertical ordinate of the to-be-predicted pixel, and $\alpha$ is a value of the angular prediction mode.

In the vertical prediction mode, a value of the vertical ordinate of the reference pixel is 0. That is, a coordinate of the reference pixel is $(c_1, 0)$.

In a horizontal prediction mode, the encoder may determine the position of the reference pixel based on Formula 2 as follows.

$$c_2 = y_0 - tan\alpha * x_0 \qquad\qquad \text{Formula 2}$$

Herein, $c_2$ is a horizontal ordinate of the reference pixel.

In the horizontal prediction mode, a value of the horizontal ordinate of the reference pixel is 0. That is, the coordinate of the reference pixel is $(0, c_2)$.

Step 3, the encoder determines a predicted pixel value of the to-be-predicted pixel according to a pixel value of the reference pixel.

The pixel value of the reference pixel is a pixel value corresponding to the position of the reference pixel calculated in Step 2. The pixel value of the reference pixel and the position of the reference pixel mentioned in the subsequent descriptions both satisfy this relationship.

As an example, the encoder may calculate the predicted pixel value of the to-be-predicted pixel by a 4-tap cubic interpolation filter.

In this case, the encoder may determine the predicted pixel value of the to-be-predicted pixel based on Formula 3 as follows.

$$p[x_0][y_0]=f[0]*p[c][0]+f[1]*p[c+1][0]+f[2]*p[c+2][0]+f[3]*p[c+3][0] \qquad \text{Formula 3}$$

Herein, $p[x_0][y_0]$ is the predicted pixel value of the to-be-predicted pixel with the coordinate position $(x_0, y_0)$, $p[c][0]$ is the pixel value of the reference pixel with the pixel position $(c, 0)$, $p[c+1][0]$ is a pixel value of a pixel with a pixel position $(c+1, 0)$, $p[c+2][0]$ is a pixel value of a pixel with a pixel position $(c+2, 0)$, and $p[c+3][0]$ is a pixel value of a pixel with a pixel position $(c+3, 0)$. $f[0]$, $f[1]$, $f[2]$, $f[3]$ are filter coefficients in the interpolation filter, which are pre-set fixed values.

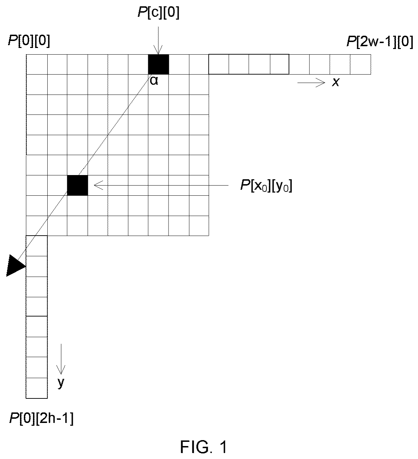

As an example, as shown in FIG. 1, in the one-dimensional projection prediction process, the projection path of the reference pixel is a linear straight line, and pixels through which the straight line passes are considered to have a same pixel value. Due to the fact that the one-dimensional projection prediction usually predicts that pixels on a straight line have the same pixel value, it is relatively accurate for predicting linear texture images, but less accurate for predicting non-linear texture images.

In order to solve the problem that the one-dimensional projection prediction cannot accurately predict non-linear texture images, an HOIP technology is proposed. In this technology, the pixel value of the to-be-predicted pixel point is predicted by a non-linear projection function (e.g., a quadratic function). The projection path of the reference pixel calculated based on the quadratic function is a quadratic function curve, which can accurately predict the pixel value of the non-linear texture image, thereby solving the problem that the non-linear texture images cannot be predicted due to the projection path of the reference pixel in the one-dimensional projection function being a straight line.

The process of predicting the pixel value of the to-be-predicted pixel based on the HOIP technology is illustrated as follows.

Step a, an encoder determines a position of a to-be-predicted pixel in a prediction unit and determines an angular prediction mode group.

Herein, the angular prediction mode group includes: an angular prediction mode $\alpha$ and an angular prediction mode $\beta$. The angular prediction mode $\alpha$ and the angular prediction mode $\beta$ are both angular prediction modes in vertical prediction angular prediction modes; or the angular prediction mode $\alpha$ and the angular prediction mode $\beta$ are both angular prediction modes in horizontal prediction angular prediction modes.

Step b, the encoder calculates the position of the to-be-predicted pixel and the angular prediction mode based on a quadratic function, and determines a position of a reference pixel corresponding to the to-be-predicted pixel.

In a case where the angular prediction mode $\alpha$ and the angular prediction mode $\beta$ both are angular prediction modes in the vertical prediction angular prediction modes, the position of the reference pixel is calculated based on Formula 4.

$$c_3 = x_0 - \frac{\tan\beta - \tan\alpha}{2*h} * y_0^2 - \tan\alpha * y_0 \qquad \text{Formula 4}$$

Herein, $c_3$ is an horizontal ordinate of the reference pixel, and h is a height of a coding unit. In the vertical prediction mode, the value of the vertical ordinate of the reference pixel is 0. That is, the coordinate of the reference pixel is $(c_3, 0)$.

In a case where the angular prediction mode $\alpha$ and the angular prediction mode $\beta$ both are angular prediction modes in the horizontal prediction angular prediction modes, the position of the reference pixel is calculated based on Formula 5.

$$c_4 = y_0 - \frac{\tan\beta - \tan\alpha}{2*w} * x_0^2 - \tan\alpha * x_0 \qquad \text{Formula 5}$$

Herein, $c_4$ is a vertical ordinate of the reference pixel, and w is a width of the coding unit. In the horizontal prediction mode, the value of the horizontal ordinate of the reference pixel is 0. That is, the coordinate of the reference pixel

is $(0, c_4)$.

Step c, the encoder predicts a pixel value of the to-be-predicted pixel in the prediction unit according to a pixel value of the reference pixel.

Herein, the specific implementation process of Step c is similar to that of Step 3 above, which will not be repeated herein.

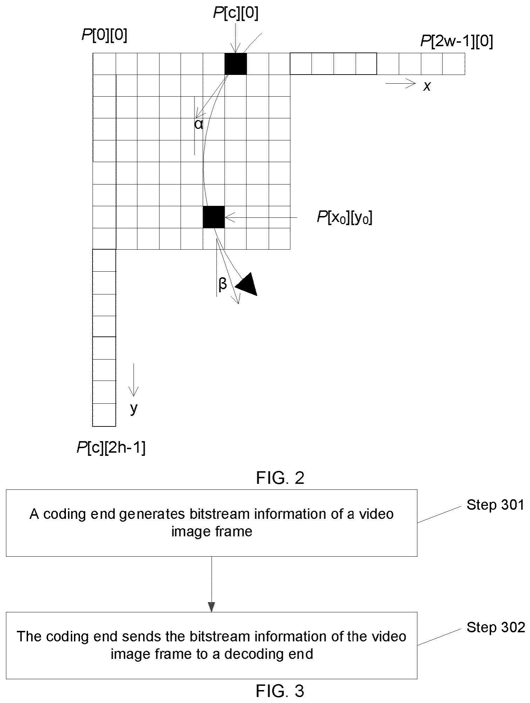

As an example, as shown in FIG. 2, in the prediction process of HOIP, the projection curve of the projection path of the reference pixel is a non-linear quadratic function curve. Based on this, the HOIP technology can well predict the pixel value of the to-be-predicted pixel in the prediction unit in the non-linear texture image.

In order to solve the problem of low prediction accuracy of one-dimensional projection prediction for the non-linear texture image, a high order intra prediction (HOIP) technology is proposed in the relevant technology, where the position of the reference pixel corresponding to the to-be-predicted pixel may be found by a non-linear projection function, and the projection path of the reference pixel is a non-linear projection function curve, which can accurately predict the pixel value of the non-linear texture image. Therefore, how to code the video image frame using the HOIP technology has become a technical problem that needs to be solved urgently.

In order to solve the technical problem in the relevant technology that the video image frame for the high order intra prediction cannot be coded, the embodiments of the present disclosure provide an intra prediction encoding method, where an encoder, when generating bitstream information of the video image frame, encodes a target primary angular prediction mode and a target extended angular prediction mode used for the high order intra prediction, and sends a bitstream including encoding information of the target primary angular prediction mode and the target extended angular prediction mode to a decoder. In this way, the decoder, after receiving the bitstream, may decode the encoding information of the target primary angular prediction mode and the target extended angular prediction mode, thereby accurately performing the high order intra prediction on the video image.

As shown in FIG. 3, the present disclosure provides an intra prediction encoding method as shown in FIG. 3, which specifically may be implemented by the following Step 301 and Step 302.

Step 301, an encoder generates bitstream information of a video image frame.

Herein, the bitstream information of the video image frame includes first indication information corresponding to a target primary angular prediction mode and second indication information corresponding to a target extended angular prediction mode, and the target primary angular prediction mode and the target extended angular prediction mode are angular prediction modes for performing a high order intra prediction on a to-be-predicted pixel in a prediction unit in the video image frame.

In some embodiments, the first indication information is used to indicate an index value of the target primary angular prediction mode. Herein, for an implementation of the index value of the target primary angular prediction mode being encoded as the first indication information, reference may be made to the relevant technology, which will not be repeated herein.

In some embodiments, the second indication information is used to indicate an index value of the target extended angular prediction mode.

As a specific implementation, the encoder first determines a plurality of candidate angular prediction mode groups, each candidate angular prediction mode group of which includes a candidate primary angular prediction mode and a candidate extended angular prediction mode. Then, the encoder determines the candidate angular prediction mode group with a best cost value as a target angular prediction mode group based on the HOIP technology, and the target angular prediction mode group includes the target primary angular prediction mode and the target extended angular prediction mode mentioned above. The encoder encodes the target primary angular prediction mode to determine the first indication information, encodes the target extended angular prediction mode to determine the second indication information, and adds the first indication information and the second indication information to the generated bitstream information of the video image frame.

Step 302, the encoder sends the bitstream information of the video image frame to a decoder.

In the embodiments of the present disclosure, the encoder, when generating the bitstream information of the video image frame, encodes the target primary angular prediction mode and the target extended angular prediction mode used for the high order intra prediction, and sends a bitstream including encoding information of the target primary angular prediction mode and the target extended angular prediction mode to the decoder. In this way, the decoder, after receiving the bitstream, may decode the encoding information of the target primary angular prediction mode and the target extended angular prediction mode, thereby accurately performing the high order intra prediction on the video image.

In some embodiments, the bitstream information of the video image frame includes at least one of:

first identification information, where the first identification information is used to indicate whether the high order intra prediction is enabled for the video image frame;

second identification information, where the second identification information is used to indicate an index value of an extended angular prediction mode of the high order intra prediction;

third identification information, where the third identification information is used to indicate whether the high order intra prediction is disabled for all video image frames;

fourth identification information, where the fourth identification information is used to indicate whether the high order intra prediction is enabled for the prediction unit;

prediction residual information, where the prediction residual information is used to indicate a prediction residual between a predicted pixel value and an original pixel value of a to-be-predicted pixel in the prediction unit.

The prediction residual information may be information obtained by entropy encoding the difference or the prediction residual. The prediction residual may be the difference between the predicted pixel value and the original pixel value of the to-be-predicted pixel, or may be a value obtained by transforming and quantizing the difference between the predicted pixel value and the original pixel value of the to-be-predicted pixel.

As an example, the encoder may add a corresponding field to the bitstream information of the video image frame, to identify at least one of the first identification information, the second identification information, the third identification information, and the fourth identification information described above, which is described in detail below.

For the above-mentioned first identification information, the encoder adds a sps_hoip_enabled_flag field in a sequence parameter set (SPS), as the above-mentioned first identification information. That is, the encoder indicates whether the high order intra prediction is enabled for the video image frame by the sps_hoip_enabled_flag field in the SPS.

When the value of the sps_hoip_enabled_flag field is 1, it represents that the high order intra prediction is enabled in a coded layer video sequence (CLVS). When the value of the sps_hoip_enabled_flag field is 0, it represents that the high order intra prediction is not enabled in the CLVS.

Exemplarily, a part of contents of the SPS with the added sps_hoip_enabled_flag field is shown in Table 1 below:

Table 1, add the sps_hoip_enabled_flag field in the SPS

| ... | ... |
| --- | --- |
| sps_log2_parallel_merge_level_minus2 | ue(v) |
| sps_isp_enabled_flag | u(1) |
| sps_mrl_enabled_flag | u(1) |
| sps_mip_enabled_flag | u(1) |
| sps_hoip_enabled_flag | u(1) |
| ... | ... |

For the above-mentioned second identification information, the encoder adds an appendIntraDir field in an intra prediction data structure in the prediction unit (PU) (Struct IntraPredictionData for prediction unit) as the above-mentioned second identification information. That is, the encoder indicates the index value of the extended angular prediction mode of the high order intra prediction by adding the appendIntraDir (i.e., the second identification information) field in the intra prediction data structure of the PU.

It should be noted that, in a case where the HOIP is not enabled in the PU, the value of the appendIntraDir (i.e., the second identification information) field is 0 or does not exist.

For the above-mentioned third identification information, the encoder adds a gci_no_hoip_constraint_flag field in a general constraint information syntax (General constraints information syntax). That is, the encoder indicates whether the high order intra prediction is disabled for all video image frames in a video by adding the gci_no_hoip_constraint_flag field in the general constraint information syntax.

When the value of the gci_no_hoip_constraint_flag (i.e., the third identification information) field is 1, it represents that the high order intra prediction is disabled for all video image frames in the video, that is, the high order intra prediction is not allowed to be enabled, and in this case, the values of the sps_hoip_enabled_flag (i.e., the first identification information field) of all video image frames in the video should be 0.

When the value of the gci_no_hoip_constraint_flag (i.e., the third identification information) field is 0, the high order intra prediction is not disabled for the image frames in the video, that is, the high order intra prediction is allowed to be enabled, and in this case, the value of the sps_hoip_enabled_flag (i.e., the first identification information) of each video image frame in the video may be determined based on whether the HOIP technology is used in the video image frame.

All the above-mentioned identification information is exemplary, and positions of all the added identification information are not limited thereto in actual applications. For example, when the first identification information is in the sequence parameter set, it may be represented as sps_hoip_enabled_flag (i.e., the first identification information). The first identification information may also be contained in a video parameter set (VPS), and in this case, may be represented as vps_hoip_enabled_flag.

Exemplarily, a part of contents of the general constraint information syntax message with the added gci_no_hoip_constraint_flag (i.e., the third identification information) field is shown in Table 2 below:

Table 2, add the gci_no_hoip_constraint_flag field in the general constraint information syntax message

| ... | ... |
|---|---|
| gci_no_isp_constraint_flag | u(1) |
| gci_no_mrl_constraint_flag | u(1) |
| gci_no_mip_constraint_flag | u(1) |
| gci_no_hoip_constraint_flag | u(1) |
| ... | ... |

For the above-mentioned fourth identification information, the encoder adds an extendIntraPredFlag field in the intra prediction data structure of the PU. That is, the encoder adds the extendIntraPredFlag field in the intra prediction data structure of the PU to indicate whether the high order intra prediction is enabled for the prediction unit.

When a value of the extendIntraPredFlag (i.e., the fourth identification information) field is 1, it represents that the high order intra prediction is enabled for the prediction unit.

When the value of the extendIntraPredFlag (i.e., the fourth identification information) field is 0, it represents that the high order intra prediction is not enabled for the prediction unit.

For the fifth identification, the encoder may refer to the prior art to indicate the residual value of the to-be-predicted pixel in the prediction unit, which will not be repeated in the present disclosure.

In the above, the identification information included in the bitstream information is described in detail.

The process that the encoder generates the bitstream information in the above Step 301 is explained in detail below in conjunction with specific implementations.

First, the process that the encoder generates the second indication information in the bitstream information is explained.

In the process that the encoder generates the second indication information, the encoder needs to first determine the index value of the target extended angular prediction mode, and then encode based on the index value of the target extended angular prediction mode to generate the second indication information.

It should be pointed out that, in the embodiments of the present disclosure, the high order intra prediction technology includes a first version and a second version, and a number of candidate angular prediction mode groups determined by the first version of the high order intra prediction is greater than a number of candidate angular prediction mode groups determined by the second version of the high order intra prediction.

As an example, the first version is a high-efficiency (HE) version, and the second version is a low complexity (LC) version.

The encoder selects the candidate angular prediction mode group differently in the first version and the second version, which results in that the encoder determines the index value of the target extended angular prediction mode differently in different versions.

Generally speaking, in the first version, the encoder, when selecting the extended angular prediction mode, selects all angular prediction modes, or all angular prediction modes in a same horizontal mode or vertical mode as the primary angular prediction mode.

In the second version, the encoder, when selecting the extended angular prediction mode, selects a plurality of most commonly-used extended angular prediction modes corresponding to the candidate primary angular prediction mode, for the candidate primary angular prediction mode. The plurality of most commonly-used extended angular prediction modes should satisfy that an angular difference between the extended angular prediction mode and the candidate primary angular prediction mode is greater than a set threshold.

Therefore, for the first version, the index value of the target extended angular prediction mode determined by the encoder satisfies Case 1 where: the index value of the target extended angular prediction mode is an index value of the target extended angular prediction mode in the set containing all angular prediction modes.

For the second version, the index value of the target extended angular prediction mode determined by the encoder satisfies Case 2 where: the index value of the target extended angular prediction mode is an index value of the target extended angular prediction mode in the set containing a plurality of most commonly-used extended angular prediction modes corresponding to the target primary angular prediction mode.

The processes that the encoder encodes the index value of the target extended angular prediction mode to generate the second indication information in the above-mentioned Case 1 and Case 2 are explained, respectively.

Case 1, the index value of the target extended angular prediction mode is an index value of the target extended angular prediction mode in the set containing all angular prediction modes.

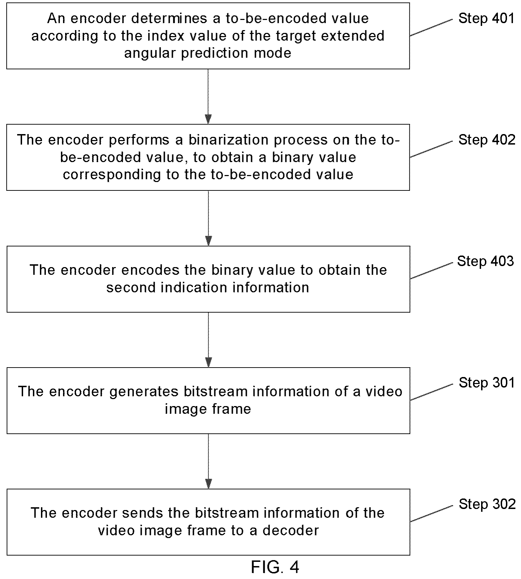

In Case 1, in conjunction with FIG. 3, as shown in FIG. 4, the specific process that the encoder encodes the index value of the target extended angular prediction mode to generate the second indication information may be implemented by the following Step 401 to Step 403.

Step 401, the encoder determines a to-be-encoded value according to the index value of the target extended angular prediction mode.

In some embodiments, the encoder uses 65 other angular prediction modes other than Planar and DC among 67 angular prediction modes of VVC, as candidate extended angular prediction modes. Each angular prediction mode of the 67 angular prediction modes has a fixed index, where the index of Planar is 1, the index of DC is 2, and the indexes of the 65 other angular prediction modes are 2 to 66, respectively. The index value of the target extended angular prediction mode is noted as one of 2 to 66.

It can be understood that, among the above-mentioned 65 angular prediction modes, indexes of horizontal angular prediction modes are 2 to 34, and indexes of vertical angular prediction modes are 35 to 66.

The encoder encodes the index value of the target extended angular prediction mode, to indicate the target extended angular prediction mode to the decoder.

In some embodiments, in order to reduce a number of encoded bits, the encoder may subtract a fixed value from the index value of the target extended angular prediction mode, to determine the to-be-encoded value.

For example, the to-be-encoded value is equal to the index value of the target extended angular prediction mode minus a first value.

Alternatively, in a case where the target extended angular prediction mode belongs to the vertical angular prediction modes, the to-be-encoded value is equal to the index value of the target extended angular prediction mode minus a second value; where the second value is greater than the first value, and a difference between the second value and the first value is equal to a total number of horizontal angular prediction modes.

As an example, the first value is equal to 2, and the second value is equal to 35.

Specifically, a value range of the index value of the target extended angular prediction mode is 2 to 66. In order to reduce the number of encoded bits of the index value of the target extended angular prediction mode, the index value of the target extended angular prediction mode may be subtracted by 2, so that the value range of the encoded value is 0 to 64. 0 to 64 will use fewer number of encoded bits than 2-66.

Step 402, the encoder performs a binarization process on the to-be-encoded value, to obtain a binary value corresponding to the to-be-encoded value.

In some embodiments, the encoder may binarize the encoded value idx by using any one of binarization methods of truncated rice binarization, K-th order exp-Golomb binarization, or fixed-length binarization, to obtain a binarized encoded value $idx_{binary}$. The specific implementation thereof will not be repeated in the embodiments of the present disclosure.

Step 403, the encoder encodes the binary value to obtain the second indication information.

In some embodiments, the encoder may encode binary data of the index value of the target extended angular prediction mode by bypass encoding, etc., which will not be repeated in the present disclosure.

In Case 1, the encoder first processes the index value of the target extended angular prediction mode to obtain the to-be-encoded value, and the encoder obtains the second indication information by binarizing the to-be-encoded value and encoding the binarized to-be-encoded value, so that the bitstream information sent by the encoder to the decoder can accurately indicate the index value of the target extended angular prediction mode, and then the decoder may perform the intra prediction according to the index value of the target extended angular prediction mode, to determine the pixel value of the to-be-predicted pixel in the prediction unit. Meanwhile, the to-be-encoded value determined by the encoder may be a value smaller than the index value of the target extended angular prediction mode, thereby reducing the number of encoded bits.

The process that the encoder encodes the index value of the target extended angular prediction mode to generate the second indication information in Case 2 is explained below.

Case 2, the index value of the target extended angular prediction mode is an index value of the target extended angular prediction mode in a set containing a plurality of most commonly-used extended angular prediction modes corresponding to the target primary angular prediction mode.

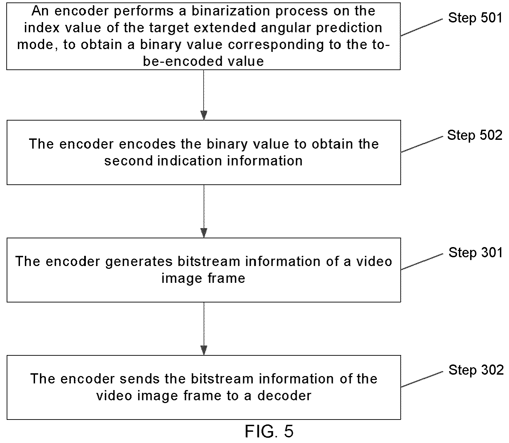

In Case 2, in conjunction with FIG. 3, as shown in FIG. 5, the process that the encoder encodes the index value of the target extended angular prediction mode to generate the second indication information in Case 2 may be specifically implemented by the following Step 501 and Step 502.

Step 501, the encoder performs a binarization process on the index value of the target extended angular prediction mode, to obtain a binary value corresponding to the to-be-encoded value.

Step 502, the encoder encodes the binary value to obtain the second indication information.

Herein, for the specific implementation of Step 501 and Step 502, references may be made to the above-mentioned Step 402 and Step 403, which will not be repeated herein.

It should be noted that, in Case 2, the encoder, when determining the candidate extended angular prediction mode, usually selects 4 most commonly-used extended angular prediction modes for each candidate primary angular prediction mode. In this way, the encoder, when determining the index value of the target extended angular prediction mode, first determines the target primary angular prediction mode corresponding to the index value of the target extended angular prediction mode, and then determines the index value of the target extended angular prediction mode as an index value in a set of the plurality of most commonly-used extended angular prediction modes corresponding to the target primary angular prediction mode. In this case, the value of the index value of the target extended angular prediction mode is 0 to 3.

In Case 2, the encoder directly binarizes the index value of the target extended angular prediction mode and encodes the binarized index value, to obtain the second indication information, so that the bitstream information sent by the encoder to the decoder can accurately indicate the index value of the target extended angular prediction mode, and then the decoder may perform the intra prediction according to the index value of the target extended angular prediction mode, to determine the pixel value of the to-be-predicted pixel in the prediction unit.

Before the encoder generates the second indication information in the bitstream information, the encoder also needs to determine a plurality of candidate angular prediction modes, and then select a target angular prediction mode group from the plurality of candidate angular prediction mode groups, and further determine the target primary angular prediction mode and the target extended angular prediction mode. The details are explained below.

Second, the encoder determines a plurality of candidate angular prediction modes.

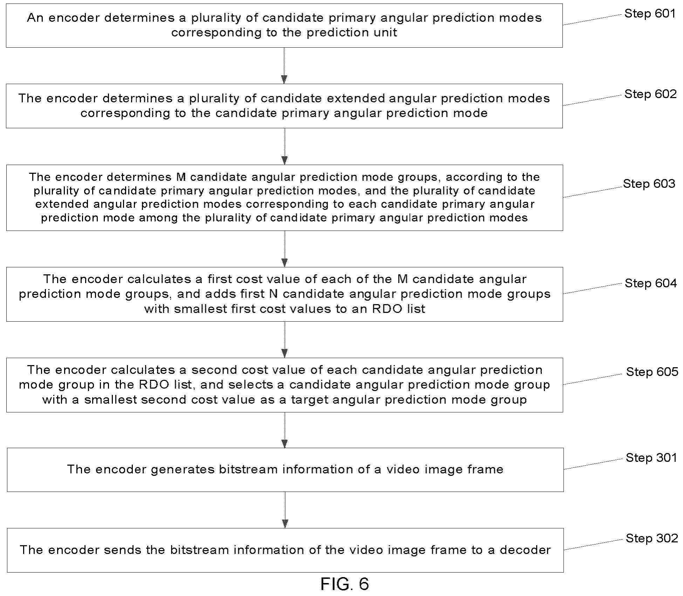

In conjunction with FIG. 3, as shown in FIG. 6, the process that the encoder selects the target primary angular prediction mode and the target extended angular prediction mode may be specifically implemented by the following Step 601 to Step 603, which are explained in detail below.

Step 601, the encoder determines a plurality of candidate primary angular prediction modes corresponding to the prediction unit.

In the high order intra prediction technology, the encoder determines the plurality of candidate primary angular prediction modes corresponding to the prediction unit differently based on different versions.

Scenario 1: the first version

In the first version, the plurality of candidate primary angular prediction modes corresponding to the prediction unit include: a plurality of most probable modes (MPMs) corresponding to the prediction unit and first P angular prediction modes in a rate-distortion optimization (RDO) list, where P is a positive integer.

In some embodiments, there is an angular prediction mode duplicated between the plurality of most probable modes corresponding to the prediction unit and the first P angular prediction modes in the RDO list. Therefore, the encoder, after acquiring the plurality of most probable modes corresponding to the prediction unit and the first P angular prediction modes in the RDO list, performs deduplication on them, to determine the plurality of candidate primary angular prediction modes corresponding to the prediction unit.

As an example, a number of the plurality of most probable modes corresponding to the prediction unit is Q, and there are R angular prediction modes duplicated between the plurality of most probable modes corresponding to the prediction unit and the first P angular prediction modes in the RDO list, then the number of the plurality of candidate primary angular prediction modes corresponding to the prediction unit determined by the encoder is (Q+P-R), where R is an integer less than Q and less than P.

Scenario 2: the second version

In the second version, the plurality of candidate primary angular prediction modes corresponding to the prediction unit include: a plurality of most probable modes corresponding to the prediction unit.

As an example, the number of the plurality of most probable modes corresponding to the prediction unit is Q. In this case, the plurality of candidate primary angular prediction modes corresponding to the prediction unit are the Q most probable modes.

In the above process, as an example, the value of Q is 22, and the value of P is a value that may be flexibly set.

Step 602, the encoder determines a plurality of candidate extended angular prediction modes corresponding to the candidate primary angular prediction mode.

It should be noted that, in conjunction with the above Step 601, the encoder selects the candidate extended angular prediction modes differently in different versions, which are explained in detail below in conjunction with the above first version and the above second version, respectively.

In conjunction with the above first version, the plurality of candidate extended angular prediction modes corresponding to the candidate primary angular prediction mode, determined by the encoder, include an angular prediction mode with a same type as the candidate primary angular prediction mode among all angular prediction modes.

Herein, the same type mentioned above refers to that: the primary angular prediction mode and the extended angular prediction mode are both angular prediction modes among the vertical prediction modes; or the primary angular prediction mode and the extended angular prediction mode are both angular prediction modes among the horizontal prediction mode.

Specifically, in the first version, Step 602 may be specifically implemented by the following process.

The encoder, after determining (Q+P-R) candidate primary angular prediction modes, determines the type of the candidate primary angular prediction mode.

In a case where the type of the candidate primary angular prediction mode is a candidate primary angular prediction mode among the horizontal prediction modes, the encoder selects all angular prediction modes from the horizontal prediction modes as the candidate extended angular prediction modes.

In a case where the type of the candidate primary angular prediction mode is a candidate primary angular prediction mode among the vertical prediction modes, the encoder selects all angular prediction modes from the vertical prediction modes as the plurality of candidate extended angular prediction modes.

As an example, in the first version, the number of candidate extended angular prediction modes may be 64. That is, the encoder selects 64 extended angular prediction modes as the candidate extended angular prediction modes, for each candidate primary angular prediction mode.

In conjunction with the above-mentioned second version, the plurality of candidate extended angular prediction modes corresponding to the candidate primary angular prediction mode, determined by the encoder, include: the plurality of most commonly-used extended angular prediction modes corresponding to the candidate primary angular prediction mode.

Specifically, in the second version, Step 602 may be specifically implemented by the following process.

The encoder, after determining the Q candidate primary angular prediction modes, for each candidate primary angular prediction mode, selects the plurality of most commonly-used extended angular prediction modes corresponding to the primary angular prediction mode as candidate extended angular prediction modes.

In some embodiments, the plurality of most commonly-used extended angular prediction modes corresponding to the candidate primary angular prediction mode are related to a size of a coding unit.

Step 603, the encoder determines M candidate angular prediction mode groups, according to the plurality of candidate primary angular prediction modes, and the plurality of candidate extended angular prediction modes corresponding to each candidate primary angular prediction mode among the plurality of candidate primary angular prediction modes.

Herein, the candidate angular prediction mode group includes a candidate primary angular prediction mode and a candidate extended angular prediction mode corresponding to the candidate primary angular prediction mode; M is an integer greater than 1.

In conjunction with the example in the above first version, the encoder determines a total of $(22+P-R) \times 64$ candidate angular prediction mode groups. In this case, $M=(22+P-R) \times 64$.

In conjunction with the example in the above second version, each primary angular prediction mode corresponds to 4 most commonly used extended angular prediction modes. In a case where the value of Q is 22, a total of $22 \times 4 = 88$ candidate angular prediction mode groups are selected in the second version. In this case, $M=88$.

The process that the encoder determines the plurality of candidate angular prediction modes is explained in detail above.

After the encoder determines the plurality of candidate angular prediction mode groups, the encoder needs to select a target angular prediction mode group from the plurality of candidate angular prediction mode groups, which is explained in detail below.

Third, the encoder determines the plurality of candidate angular prediction modes.

As shown in FIG. 6, after calculating the M candidate angular prediction mode groups, the process that the encoder selects the target angular prediction mode group from the M candidate angular prediction mode groups may be specifically implemented by the following Step 604 to Step 605, which are explained in detail below.

Step 604, the encoder calculates a first cost value of each of the M candidate angular prediction mode groups, and adds first N candidate angular prediction mode groups with smallest first cost values to an RDO list.

N is a positive integer less than M.

In some embodiments, the encoder calculates for each candidate angular prediction mode group by a rough mode decision (RMD) algorithm, to determine the respective first cost value thereof.

Specifically, the encoder predicts the pixel value of the prediction unit according to a candidate angular prediction mode group, and then performs a Hadamard transform on the residual value between the predicted pixel value and the original pixel value of the prediction unit to determine a sum of absolute transformed difference (SATD) distortion of the prediction unit, and further determines the first cost value of the candidate angular prediction mode group, and finally, adds the first N candidate angular prediction mode groups with smallest first cost values to the RDO list.

In some embodiments, in conjunction with the above first version, the encoder adds 3 candidate angular prediction mode groups with smallest first cost values to the RDO list.

In conjunction with the above second version, the encoder adds 1 candidate angular prediction mode group with a smallest first cost value to the RDO list.

In some embodiments, the encoder, before calculating the first cost value, prejudges whether an angular difference between the candidate primary angular prediction mode and the extended angular prediction mode in the candidate angular prediction mode group is greater than a preset threshold. In a case where the angular difference is greater than the preset threshold, the encoder calculates the first cost value of the candidate angular prediction mode group.

Since the distortion calculated from the candidate angular prediction mode group with a large angular difference is usually high, the probability of the candidate angular prediction mode group being selected as the target angular prediction mode group is very small. Therefore, by pre-screening and removing the candidate angular prediction mode group with the large angular difference, the calculation complexity of encoding may be further reduced.

Step 605, the encoder calculates a second cost value of each candidate angular prediction mode group in the RDO list, and selects a candidate angular prediction mode group with a smallest second cost value as a target angular prediction mode group.

The target angular prediction mode group includes the target primary angular prediction mode and the target extended angular prediction mode.

In some embodiments, the encoder traverses all candidate angular prediction mode groups in the full RDO list to perform transformation, quantization, inverse transformation, and inverse quantization, to determine the second cost value of each candidate angular prediction mode group. The candidate angular prediction mode group with the smallest second cost value is selected as the target angular prediction mode group.

It should be pointed out that, in addition to the first N candidate angular prediction mode groups with smallest first cost values screened out based on the HOIP, the RDO list also has a parameter obtained by prediction. For example, the parameter is obtained by performing the intra prediction by means of multi-reference lines (Multi-reference lines, MRL) intra prediction and matrix weighted intra prediction (Matrix weighted intra prediction, MIP), or other schemes. In the RDO calculation process, the encoder calculates a prediction scheme with a smallest RD cost value in all parameters as a final prediction scheme. In a case where the RD cost values of the first N candidate angular prediction mode groups screened out based on the HOIP are the smallest, the encoder determines to use the HOIP as the final intra prediction scheme.

In the embodiments of the present disclosure, the encoder finally selects the candidate angular prediction mode group with the smallest cost value as the target angular prediction mode group, which can ensure that the encoding cost is the smallest when the video image frame is encoded, thereby improving the encoding performance of the encoder.

It can be understood that, the encoder, after determining the target angular prediction mode group with the RD cost value, calculates the predicted pixel value of the to-be-predicted pixel in the prediction unit according to the target angular prediction mode group, and then calculates the residual value between the predicted pixel value and the original pixel value. The encoder determines prediction residual information in the bitstream information according to the residual value.

In some embodiments, the encoder determines a second pixel position of a reference pixel corresponding to the to-be-predicted pixel in the prediction unit, according to a pixel position of the to-be-predicted pixel in the prediction unit, the target primary angular prediction mode, the target extended angular prediction mode and a non-linear projection function; and determines a predicted pixel value of the to-be-predicted pixel in the prediction unit, according to the second pixel position of the reference pixel, the target primary angular prediction mode, and the target extended angular prediction mode.

Although the high order intra prediction can accurately predict linear texture images, the calculation process of the non-linear projection function is relatively complicated, resulting in high calculation complexity when the encoder uses the high order intra prediction technology for the intra prediction.

In order to reduce the calculation complexity of the intra prediction, in the embodiments of the present disclosure, a position deviation value between a position of the reference pixel determined by the linear projection function and a position of the reference pixel of the high order intra prediction may be first calculated, and then an accurate position of the reference pixel may be calculated according to a linear projection function and the position deviation value. In this way, the calculation complexity of the high order intra prediction is greatly reduced without affecting the accurate prediction for linear texture images.

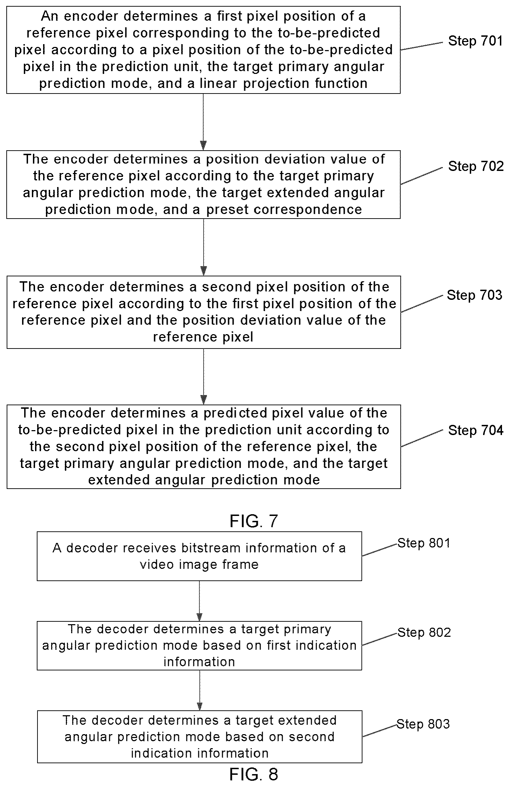

As shown in FIG. 7, the process that the position of the reference pixel is calculated according to the linear projection function and the position deviation value may be specifically implemented by the following Step 701 to Step 704.

Step 701, the encoder determines a first pixel position of a reference pixel corresponding to the to-be-predicted pixel according to a pixel position of the to-be-predicted pixel in the prediction unit, the target primary angular prediction mode, and a linear projection function.

Herein, the linear projection function is a first-order function, which may refer to the above Formula 1 or Formula 2.

Step 702, the encoder determines a position deviation value of the reference pixel according to the target primary angular prediction mode, the target extended angular prediction mode, and a preset correspondence.

Herein, the preset correspondence is a correspondence between the primary angular prediction mode, the extended angular prediction mode and the position deviation value.

Exemplarily, the above-mentioned preset correspondence may be implemented in the form of a table. In this way, the position deviation value may be simply determined by looking up the table, so as to reduce the amount of calculation.

Step 703, the encoder determines a second pixel position of the reference pixel according to the first pixel position of the reference pixel and the position deviation value of the reference pixel.

In some embodiments, the second pixel position of the reference pixel is a pixel position determined based on the pixel position of the to-be-predicted pixel in the prediction unit, the target primary angular prediction mode, the target extended angular prediction mode, and a non-linear function.

As an example, the non-linear function involved in the embodiments of the present disclosure include, but is not limited to: quadratic function, logarithmic function, exponential function, trigonometric function, and inverse proportional function.

In this way, based on the first pixel position of the reference pixel and the position deviation value of the reference pixel, the pixel position calculated by the non-linear function may be accurately obtained, which significantly reduces the calculation complexity of the intra prediction.

Step 704, the encoder determines a predicted pixel value of the to-be-predicted pixel in the prediction unit according to the second pixel position of the reference pixel, the target primary angular prediction mode, and the target extended angular prediction mode.

Herein, the specific process may refer to the method described in Formula 3 in the intra prediction mentioned above, to determine the predicted pixel value of the to-be-predicted pixel in the prediction unit, which will not be repeated herein.

The above provides a method that: the encoder first calculates the position deviation value between the position of the reference pixel determined by the first-order projection scheme and the reference pixel of the high order intra prediction, and then calculates the accurate position of the reference pixel according to a linear projection function and the position deviation value.

In some embodiments, the preset correspondence may be determined by: determining a calculation function for the position deviation value according to the non-linear projection function and the linear projection function; for each angular prediction mode group, determining the position deviation value corresponding to the angular prediction mode group, according to the pixel position of the to-be-predicted pixel, the angular prediction mode group, and the calculation function for the position deviation value, where the each angular prediction mode group includes a primary angular prediction mode and an extended angular prediction mode; and establishing the preset correspondence according to the each angular prediction mode group and the position deviation value corresponding to the each angular prediction mode group.

Taking an example in which the non-linear function is the quadratic function shown in the above Formula 3, in a case where the primary angular prediction mode and the extended angular prediction mode both belong to the vertical prediction mode set, the encoder takes a difference between the above Formula 4 and Formula 1 to obtain the calculation formula for the position deviation value as follows:

$$\text{error}_{\text{vertical}} = -\frac{\tan\beta - \tan\alpha}{2 * h} * y_0^2 \qquad\qquad \text{Formula } 6$$

Herein, $\text{error}_{\text{vertical}}$ is the position deviation value.

In a case where the primary angular prediction mode and the extended angular prediction mode both belong to the horizontal prediction mode set, the calculation formula for the deviation value as follows is obtained by taking a difference between the above Formula 5 and Formula 2:

$$\text{error}_{\text{horizon}} = -\frac{\tan\beta - \tan\alpha}{2 * w} * x_0^2 \qquad\qquad \text{Formula } 7$$

Afterwards, in a case of vertical prediction modes in the angular prediction mode group, the encoder may apply the angular prediction mode in the candidate angular prediction mode group to Formula 6, to determine the position deviation value of each candidate angular prediction mode group.

In a case of horizontal prediction modes in the angular prediction mode group, the encoder may apply the angular prediction mode in the candidate angular prediction mode group to Formula 7, to determine the position deviation value of each candidate angular prediction mode group.

Furthermore, the encoder may establish a correspondence table between the angular prediction mode groups and position deviation values, based on the position deviation value of each angular prediction mode group. In the subsequent high order intra prediction process, the position deviation value corresponding to the angular prediction mode group may be directly determined by a table lookup method.

As an example, the encoder establishes a position deviation value lookup table with 93×93×64, where 93 identifies 65 angular prediction modes in the VVC + 28 wide-angular prediction modes, and 64 is the width or height of the PU (specifically, in the vertical prediction mode, 64 is the height of the PU, and in the horizontal prediction mode, 64 is the width of the PU).

Taking an example in which the primary angular prediction mode is 50 and the extended angular prediction mode is 49, they are applied to the above Formula 6 or Formula 7, and a set of position deviation values is determined as: [0, 0, 0, 0, 0, 0, -1, -1, -2, -2, -3, -3, -4, -5, -6, -7, -8, -9, -10, -11, -12, -13, -15, -16, -18, -19, -21, -22, -24, -26, - 28, -30, -32, -34, -36, -38, -40, -42, -45, -47, -50, -52, -55, -57, -60, -63, -66, -69, -72, -75, -78, -81, -84, -87, -91, -94, -98, -101, -105, -108, -112, -116, -120, -124].

Afterwards, for the angular prediction mode set with the primary angular prediction mode being 50 and the extended angular prediction mode being 49, the encoder may directly select the corresponding position deviation value from the above-mentioned set, according to the width or height of the PU.

In the embodiments of the present disclosure, the encoder may first calculate the position deviation value between the position of the reference pixel determined by the non-linear projection function and the position of the reference pixel of the high order intra prediction, and then calculate the accurate position of the reference pixel according to a linear projection function and the position deviation value. In this way, the calculation complexity of the high order intra prediction is greatly reduced without affecting the accurate prediction for linear texture images.

The encoding process in the first version and the second version described above is explained below in detail in conjunction with specific examples.

First version

a), The encoder determines the size of the coding unit (CU), and in the first version, the size of the CU is limited to w×h≥16.

b), The encoder selects Q most probable modes corresponding to the prediction unit and first P angular prediction modes in the RDO list, and deletes R duplicated angular prediction modes, to obtain candidate primary angular prediction modes. As an example, the value of Q is 22, and the value of P may be flexibly set as needed.

For the specific implementation, reference may be made to the explanation of the first version in the above Step 601, which will not be repeated herein.

c), The encoder selects T angular prediction modes corresponding to each candidate primary angular prediction mode as candidate extended angular prediction modes. In an example, the value of T is 64.

For the specific implementation, reference may be made to the explanation of the first version in the above Step 602, which will not be repeated herein.

d), The encoder generates ((Q+P-R) ×T) candidate angular prediction mode groups according to the candidate primary angular prediction modes and the candidate extended angular prediction modes.

For the specific implementation, reference may be made to the explanation of the first version in the above Step 603, which will not be repeated herein.

e), The encoder performs the HOIP calculation on each candidate angular prediction mode group, to determine the cost value of each candidate angular prediction mode group.

For the specific implementation, reference may be made to the explanation in the above Step 604, which will not be repeated herein.

f), The encoder adds a candidate angular prediction mode group with the smallest cost value to the RDO list, and performs the full RDO calculation, to determine a target angular prediction mode group.

For the specific implementation, reference may be made to the explanation in the above Step 605, which will not be repeated herein.

As an example, in the first version, the specific encoding process of the encoder includes the following contents.

The encoder first encodes the sps_hoip_enabled_flag field (i.e., the first identification information), and if the video image frame uses the HOIP technology, then encodes the sps_hoip_enabled_flag (i.e., the first identification information) field as 1, and if the HOIP technology is not used, then encodes the sps_hoip_enabled_flag (i.e., the first identification information) field as 0, and the encoder skips the relevant calculation process of the HOIP technology.

It should be pointed out that, in the subsequent encoding process, for the encoding process of the target primary angular prediction mode, reference may be made to the prior art, which will not be repeated herein. The encoding process of the target extended angular prediction mode is only explained below.

In a case where the pu.extendIntraPredFlag (i.e., the fourth identification information) is true, the encoder encodes the field as 1, and in a case where the pu.extendIntraPredFlag (i.e., the fourth identification information) is false, encodes the field as 0, and in a case where the pu.extendIntraPredFlag (i.e., the fourth identification information) field is encoded as 0, the encoder skips the relevant calculation process of the HOIP technology.

In a case where the pu.extendIntraPredFlag (i.e., the fourth identification information) is encoded as 1, the encoder determines whether the target extended angular prediction mode is among 4 candidate extended angular prediction modes corresponding to the target primary angular prediction mode.

In a case where the target extended angular prediction mode is one of the 4 candidate extended angular prediction modes corresponding to the target primary angular prediction mode, the encoder encodes a first bit of the appendIntraDir (i.e., the second identification information) field as 1.

In this case, the encoder determines the index value $idx \in \{0, 1, 2, 3\}$ of the target extended angular prediction mode among the 4 candidate extended angular prediction modes corresponding to the target primary angular prediction mode.

The encoder performs the binarization calculation on the idx by using any one of binarization methods of truncated rice binarization, K-order exp-Golomb binarization or fixed-length binarization, to obtain a binarized encoded value $idx_{binary}$.

The encoder encodes the binarized value $idx_{binary}$ by using bypass encoding (equal probability), to obtain the second indication information.

In a case where the target extended angular prediction mode is not one of the 4 candidate extended angular prediction modes corresponding to the target primary angular prediction mode, the encoder encodes the first bit of the appendIntraDir (i.e., the second identification information) field as 0.

In this case, the encoder subtracts the first value from the target extended angular prediction mode (for example, using a formula $(idx=\beta-2)$) to determine the encoded value idx.

The encoder performs the binarization calculation on the idx by using any one of binarization methods of truncated rice binarization, K-order exp-Golomb binarization or fixed-length binarization, to to obtain a binarized encoded value $idx_{binary}$.

The encoder encodes the binarized value $idx_{binary}$ by using bypass encoding (equal probability), to obtain the second indication information.

Second version

a), The encoder determines the size of the CU, and in the second version, the size of the CU is limited to $w \times h \geq 128$.

b), The encoder selects Q most probable modes corresponding to the prediction unit as candidate primary angular prediction modes. In an example, the value of Q is 22.

For the specific implementation, reference may be made to the explanation of the second version in the above Step 601, which will not be repeated herein.

c), The encoder selects T angular prediction modes corresponding to each candidate primary angular prediction mode, as candidate extended angular prediction modes. In an example, the value of T is 4.

For the specific implementation, reference may be made to the explanation of the second version in the above Step 602, which will not be repeated herein.

d), The encoder generates $(Q \times T)$ candidate angular prediction mode groups according to the candidate primary angular prediction modes and the candidate extended angular prediction modes.

For the specific implementation, reference may be made to the explanation of the second version in the above Step 603, which will not be repeated herein.

e), The encoder performs the HOIP calculation on each candidate angular prediction mode group, to determine the cost value of each candidate angular prediction mode group.

For the specific implementation, reference may be made to the explanation in the above Step 604, which will not be repeated herein.

f), The encoder adds a candidate angular prediction mode group with the smallest cost value to the RDO list, and performs the full RDO calculation, to determine a target angular prediction mode group.

For the specific implementation, reference may be made to the explanation in the above Step 605, which will not be repeated herein.

As an example, in the second version, the specific encoding process of the encoder includes the following contents.

The encoder first encodes the sps_hoip_enabled_flag (i.e., the first identification information) field, and if the video image frame uses the HOIP technology, then encodes the sps_hoip_enabled_flag (i.e., the first identification information) field as 1, and if the HOIP technology is not used, then encodes the sps_hoip_enabled_flag (i.e., the first identification information) field as 0, and the encoder skips the relevant calculation process of the HOIP technology.

It should be pointed out that, in the subsequent encoding process, for the encoding process of the target primary angular prediction mode, reference may be made to the prior art, which will not be repeated herein. The encoding process of the target extended angular prediction mode is only explained below.

In a case where the pu.extendIntraPredFlag (i.e., the fourth identification information) is true, the encoder encodes the field as 1, and in a case where the pu.extendIntraPredFlag (i.e., the fourth identification information) is false, encodes the field as 0, and in a case where the pu.extendIntraPredFlag (i.e., the fourth identification information) field is encoded as 0, the encoder skips the relevant calculation process of the HOIP technology.

In a case where the pu.extendIntraPredFlag (i.e., the fourth identification information) is encoded as 1, the encoder determines the index value $idx \in \{0, 1, 2, 3\}$ of the target extended angular prediction mode among the 4 candidate extended angular prediction modes corresponding to the target primary angular prediction mode.

The encoder performs the binarization calculation on the idx by using any one of binarization methods of truncated rice binarization, K-order exp-Golomb binarization or fixed-length binarization, to obtain a binarized encoded value $idx_{binary}$.

The encoder encodes the binarized value $idx_{binary}$ by using bypass encoding (equal probability), to obtain the second indication information.

The encoder, after generating the bitstream information of the video image frame, sends the bitstream information of the video image frame to the decoder, so that the decoder decodes the bitstream information of the video image frame, to determine image information of the video image frame. The process that the decoder decodes the video image frame will be explained below.

As shown in FIG. 8, the process that the decoder decodes the video image frame may be specifically implemented by following Step 801 to Step 803.

Step 801, a decoder receives bitstream information of a video image frame.

Herein, the bitstream information of the video image frame includes first indication information corresponding to a target primary angular prediction mode and second indication information corresponding to a target extended angular prediction mode, and the target primary angular prediction mode and the target extended angular prediction mode are angular prediction modes for performing a high order intra prediction on a prediction unit in the video image frame.

Herein, for the specific understanding of the bitstream information, reference may be made to the explanation of the bitstream information in the aforementioned decoder, which will not be repeated in the present disclosure.

Step 802, the decoder determines a target primary angular prediction mode based on the first indication information.

In some embodiments, the first indication information is used to indicate an index value of the target primary angular prediction mode. Herein, for the implementation of the index value of the target primary angular prediction mode being encoded as the first indication information, reference may be made to the relevant technology, which will not be repeated herein.

Step 803, the decoder determines a target extended angular prediction mode based on the second indication information.

In some embodiments, the second indication information is used to indicate an index value of the target extended angular prediction mode.

In some embodiments, the index value of the target extended angular prediction mode is an index value of the target extended angular prediction mode in a set containing all angular prediction modes.

For the understanding of the second indication information, reference may be made to the explanation of the second indication information in the encoding process of the encoder mentioned above, which will not be repeated herein.

In the embodiments of the present disclosure, the decoder, after receiving a bitstream, may determine the target primary angular prediction mode according to the first indication information in the bitstream, and determine the target extended angular prediction mode according to the second indication information in the bitstream, so as to accurately perform the high order intra prediction on the video image frame, to obtain the predicted pixel value of each pixel, and further determine the original pixel value of each pixel according to the prediction residual information contained in the bitstream, so as to complete the decoding of the video image frame.

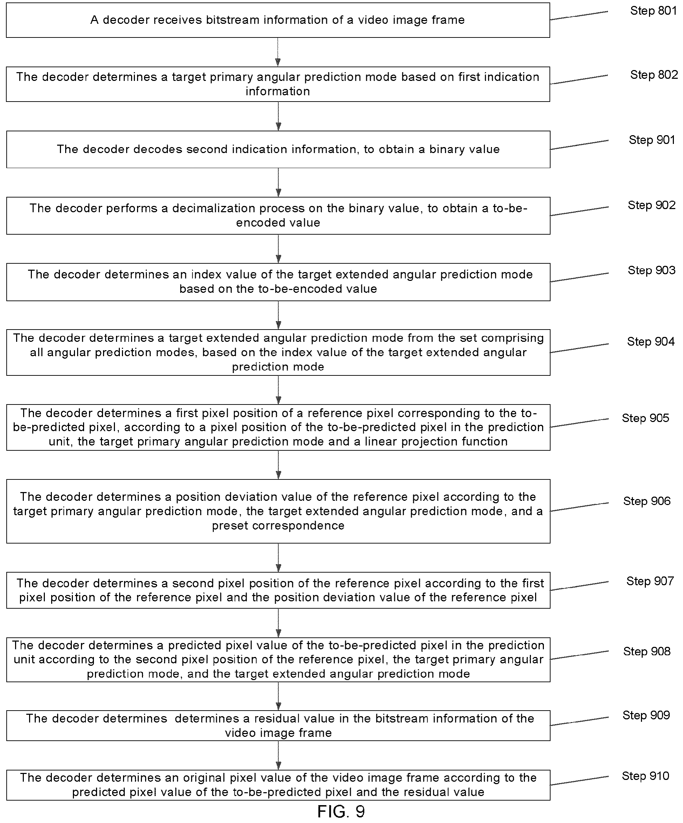

In some embodiments, in conjunction with FIG. 8, as shown in FIG. 9, the process that the decoder determines the target extended angular prediction mode based on the second indication information in the above Step 803 may be specifically implemented by following Step 901 to Step 904, which are explained in detail below.

Step 901, the decoder decodes the second indication information to obtain a binary value.

Step 902, the decoder performs a decimalization process on the binary value, to obtain a to-be-encoded value.

In some embodiments, the to-be-encoded value is equal to the index value of the target extended angular prediction mode minus a first value; or in a case where the target extended angular prediction mode belongs to vertical angular prediction modes, the to-be-encoded value is equal to the index value of the target extended angular prediction mode minus a second value; where the second value is greater than the first value, and a difference between the second value and the first value is equal to a total number of horizontal angular prediction modes.

As an example, the first value is equal to 2, and the second value is equal to 35.

Step 903, the decoder determines an index value of the target extended angular prediction mode based on the to-be-encoded value.

In some embodiments, the index value of the target extended angular prediction mode is an index value of the target extended angular prediction mode in a set including a plurality of most commonly-used extended angular prediction modes corresponding to the target primary angular prediction mode.

Step 904, the decoder determines the target extended angular prediction mode from the set including all angular prediction modes, based on the index value of the target extended angular prediction mode.

It should be pointed out that, for the implementation that the decoder decodes out the target primary angular prediction mode according to the first indication information, reference may be made to the prior art, which will not be repeated herein.

The decoder, after decoding out the target primary angular prediction mode and the target extended angular prediction mode, may determine the predicted pixel value of the to-be-predicted pixel in the prediction unit according to the target primary angular prediction mode and the target extended angular prediction mode, which will be explained in detail below.

In some embodiments, the decoder determines a second pixel position of a reference pixel corresponding to the to-be-predicted pixel, according to a pixel position of the to-be-predicted pixel in the prediction unit, the target primary angular prediction mode, the target extended angular prediction mode and a non-linear projection function; and determines a predicted pixel value of the to-be-predicted pixel in the prediction unit, according to the second pixel position of the reference pixel, the target primary angular prediction mode, and the target extended angular prediction mode.

As shown in FIG. 9, after the decoder determines the target extended angular prediction mode in Step 904, the decoder may determine the predicted pixel value of the to-be-predicted pixel in the prediction unit by the following Step 905 to Step 908, specifically.

Step 905, the decoder determines a first pixel position of a reference pixel corresponding to the to-be-predicted pixel, according to a pixel position of the to-be-predicted pixel in the prediction unit, the target primary angular prediction mode and a linear projection function.

Herein, for the specific implementation of Step 905, reference may be made to the above Step 701, which will not be repeated herein.

Step 906, the decoder determines a position deviation value of the reference pixel according to the target primary angular prediction mode, the target extended angular prediction mode, and a preset correspondence.

Herein, the preset correspondence is a correspondence between a primary angular prediction mode, an extended angular prediction mode, and a position deviation value.

Herein, for the specific implementation of Step 906, reference may be made to the above Step 702, which will not be repeated herein.

Step 907, the decoder determines a second pixel position of the reference pixel according to the first pixel position of the reference pixel and the position deviation value of the reference pixel.

Herein, for the specific implementation of Step 907, reference may be made to the above Step 703, which will not be repeated herein.

Step 908, the decoder determines a predicted pixel value of the to-be-predicted pixel in the prediction unit according to the second pixel position of the reference pixel, the target primary angular prediction mode, and the target extended angular prediction mode.

Herein, for the specific implementation of Step 908, reference may be made to the above Step 704, which will not be repeated herein.

The decoder, after determining the predicted pixel value of the to-be-predicted pixel in the prediction unit, may further determine the original pixel value of the to-be-predicted pixel in the prediction unit according to the residual value between the predicted pixel value and the original pixel value, decoded from the bitstream information, to enable the decoded image to be more accurate.

As shown in FIG. 9, after the decoder determines the predicted pixel value of the to-be-predicted pixel in the prediction unit in Step 908, the decoder may determine the original pixel value of the video image frame by the following Step 909 and Step 910, which are explained in detail below.

Step 909, the decoder determines a residual value in the bitstream information of the video image frame.

In a possible implementation, the decoder parses prediction residual information in the bitstream information of the video image frame, to determine the residual value.

For the specific calculation process of the residual value, reference may be made to the explanation in the above Step 605, which will not be repeated herein.

Step 910, the decoder determines an original pixel value of the video image frame according to the predicted pixel value of the to-be-predicted pixel and the residual value.

It should be noted that, in the present disclosure, the descriptions of residual, prediction residual, and transform quantization residual may all be understood as the residual, unless otherwise specified.

In the embodiments of the present disclosure, the decoder, after receiving the bitstream information of the video image frame, decodes the bitstream information, and determines the target angular prediction mode group based on the first indication information and the second indication information in the bitstream information. The decoder calculates for the target angular prediction mode group by using the HOIP, to determine the predicted pixel value of the to-be-predicted pixel in the prediction unit. After that, the decoder calculates the original pixel value of each to-be-predicted pixel according to the residual value between the predicted pixel value and the original pixel value, in the bitstream information, and the predicted pixel value, thereby reconstructing and restoring the video image frame. In this way, the decoder decodes the video image frame based on the HOIP technology, which may enable the prediction accuracy of the decoded image to be higher, and the residual between the original pixel value and the predicted pixel value of the to-be-predicted pixel determined based on the HOIP is smaller, and the amount of data transmitted between the encoder and the decoder will also be smaller.

In addition, the decoder, when decoding the video image frame based on the HOIP technology, may first calculate the position deviation value between the position of the reference pixel determined by a first-order projection scheme and the reference pixel of the high order intra prediction, and then calculate the accurate position of the reference pixel according to a linear projection function and the position deviation value. In this way, the calculation complexity of high order intra prediction is significantly reduced without affecting the accurate prediction for linear texture images.

The decoding process of the decoder in the first version and the second version is explained below in conjunction with specific examples.

First version

After receiving the bitstream information, the decoder decodes the bitstream information. The decoder first decodes an SPS in the bitstream information, and determines whether the decoded value of the sps_hoip_enabled_flag field (i.e., the first identification information) in the SPS is 1. If the decoded value of the field is 1, the subsequent decoding and calculation process are performed on the video image frame based on the high order intra prediction scheme, in the subsequent process. If the decoded value of the field is 0, the decoding and calculation process of the high order intra prediction is skipped, in the subsequent process.

It should be pointed out that, in the subsequent decoding process, for the decoding process of the target primary angular prediction mode, reference may be made to the prior art, which will not be repeated herein. The decoding process of the target extended angular prediction mode is only explained below.

In a case where the decoded value of the sps_hoip_enabled_flag field (i.e., the first identification information) is 1, the position of the pu.extendIntraPredFlag (i.e., the fourth identification information) field is then decoded; and if the decoded value of the field is 1, it represents that the high order intra prediction scheme is used for the image encoding of the prediction unit. Accordingly, the decoder enables the high order intra prediction scheme to decode the image. If the decoded value of the field is 0, it represents that the high order intra prediction scheme is not enabled for the image encoding of the prediction unit. Accordingly, the decoder does not enable the high order intra prediction scheme to decode the image.

In a case where the decoded value of the pu.extendIntraPredFlag (i.e., the fourth identification information) field is 1, the position of the appendIntraDir (i.e., the second identification information) field is decoded, to determine whether a first binary bit obtained by the decoding is 1.

If the first binary bit obtained by the decoding is 1, pu.extendIntraPredReadMFEMsFlag is set as true by the encoder. Then, the encoder reads two bits of binary values from the bitstream, and performs the decimal conversion on the two bits of binary values, to determine the index value of the target extended angular prediction mode. Afterwards, the encoder looks up a table according to the index value, to determine the target extended angular prediction mode corresponding to the index value among the extended angular prediction modes corresponding to the target primary angular prediction mode. The value of the target extended angular prediction mode is written into the pu.appendIntraDir (i.e., the second identification information) field by the encoder.

If the first binary bit obtained by the decoding is 0, pu.extendIntraPredReadMFEMsFlag is set as false by the encoder. Then, the encoder reads the specific encoding scheme of the encoder from the bitstream, and decodes according to the encoding scheme, to obtain the index value of the target extended angular prediction mode. Afterwards, the encoder adds 2 (or 35, which is determined based on the corresponding encoding scheme) to the index value, to obtain the target extended angular prediction mode. The value of the target extended angular prediction mode is written into the pu.appendIntraDir (i.e., the second identification information) field by the encoder.

Second version

After receiving the bitstream information, the decoder decodes the bitstream information. The decoder first decodes an SPS in the bitstream information, and determines whether the decoded value of the sps_hoip_enabled_flag (i.e., the first identification information) field in the SPS is 1. If the decoded value of the field is 1, the subsequent decoding and calculation process are performed on the video image frame based on the high order intra prediction scheme, in the subsequent process. If the decoded value of the field is 0, the decoding and calculation process of the high order intra prediction is skipped, in the subsequent process.

It should be pointed out that, in the subsequent decoding process, for the decoding process of the target primary angular prediction mode, reference may be made to the prior art, which will not be repeated herein. The decoding process of the target extended angular prediction mode is only explained below.

In a case where the decoded value of the sps_hoip_enabled_flag (i.e., the first identification information) field is 1, the position of the pu.extendIntraPredFlag (i.e., the fourth identification information) field is then decoded; and if the decoded value of the field is 1, it represents that the high order intra prediction scheme is used for the image encoding of the prediction unit. Accordingly, the decoder enables the high order intra prediction scheme to decode the image. If the decoded value of the field is 0, it represents that the high order intra prediction scheme is not enabled for the image encoding of the prediction unit. Accordingly, the decoder does not enable the high order intra prediction scheme to decode the image.

The encoder reads two bits of binary values from the bitstream, and performs the decimal conversion on the two bits of binary values, to determine the index value of the target extended angular prediction mode. Afterwards, the encoder looks up a table according to the index value, to determine the target extended angular prediction mode corresponding to the index value among the extended angular prediction modes corresponding to the target primary angular prediction mode. The value of the target extended angular prediction mode is written into the pu.appendIntraDir (i.e., the second identification information) field by the encoder.

As an example, taking an example in which the encoder encodes by using the truncated binary coding, the table when the encoder looks up the table according to the index value, is shown in the following Table 3:

Table 3

| Idx | Corresponding binary coding |
|-----|-----------------------------|
| 0 | 00 |
| 1 | 01 |
| 2 | 10 |
| 3 | 11 |

In some embodiments, if the decoder is configured with the extendIntraPredReadFlag field. In a case where no valid target extended angle prediction mode is read by the decoder, the extendIntraPredReadFlag field is set as false, and the field is initialized as false.

It should be pointed out that, the implementation process of the decoder is similar to that of the encoder. For the specific implementation and the explanation of the terms in the decoder, reference may be made to those in the above-mentioned encoder, which will not be repeated in the present disclosure.

It can be understood that, in order to implement the above functions, a communication apparatus contains corresponding hardware structures and/or software modules for performing various functions. Those skilled in the art should easily recognize that the present disclosure can be implemented in the form of hardware or a combination of hardware and computer software, in conjunction with the algorithmic steps of the respective examples described in the embodiments of the present disclosure. Whether a certain function is performed by hardware or computer software-driven hardware depends on the specific application and design constraints of the technical solutions. Professional technicians may use different methods to implement the described functions, for each specific application, but such an implementation should not be considered beyond the scope of the present disclosure.

In the embodiments of the present disclosure, the communication apparatus may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software.

It should be noted that the division of modules in the embodiments of the present disclosure is illustrative, and is merely a kind of logical functional division, and there may be other division methods in actual implementations. The example in which each functional module may be divided corresponding to each function is taken for explanation below.

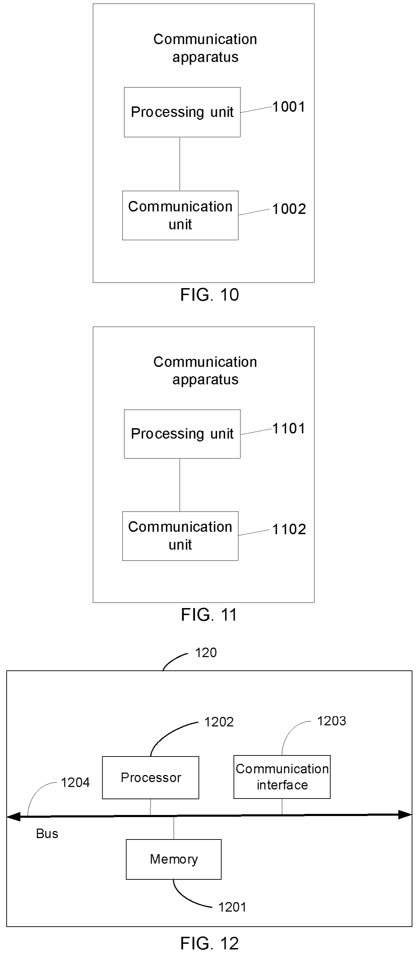

FIG. 10 is a structural schematic diagram of a communication apparatus, provided in the embodiments of the present disclosure, and the communication apparatus may perform the intra prediction encoding method provided in the above method embodiments. As shown in FIG. 10, the communication apparatus includes: a communication unit 1002, and a processing unit 1001.

The processing unit 1001 is configured to generate bitstream information of a video image frame, where the bitstream information of the video image frame includes first indication information corresponding to a target primary angular prediction mode and second indication information corresponding to a target extended angular prediction mode, and the target primary angular prediction mode and the target extended angular prediction mode are angular prediction modes for performing a high order intra prediction on a prediction unit in the video image frame.

The communication unit 1002 is configured to send the bitstream information of the video image frame to a decoder.

In some embodiments, the second indication information is used to indicate an index value of the target extended angular prediction mode.

In some embodiments, the index value of the target extended angular prediction mode is an index value of the target extended angular prediction mode in a set including all angular prediction modes.

In some embodiments, the processing unit 1001 is specifically configured to: determine a to-be-encoded value according to the index value of the target extended angular prediction mode; perform a binarization process on the to-be-encoded value, to obtain a binary value corresponding to the to-be-encoded value; and encode the binary value to obtain the second indication information.

In some embodiments, the to-be-encoded value is equal to the index value of the target extended angular prediction mode minus a first value; or in a case where the target extended angular prediction mode belongs to vertical angular prediction modes, the to-be-encoded value is equal to the index value of the target extended angular prediction mode minus a second value; where the second value is greater than the first value, and a difference between the second value and the first value is equal to a total number of horizontal angular prediction modes.

In some embodiments, the first value is equal to 2, and the second value is equal to 35.

In some embodiments, the index value of the target extended angular prediction mode is an index value of the target extended angular prediction mode in a set including a plurality of most commonly-used extended angular prediction modes corresponding to the target primary angular prediction mode.

In some embodiments, the processing unit 1001 is specifically configured to: determine the second indication information by: performing a binarization process on the index value of the target extended angular prediction mode to obtain a binary value corresponding to a to-be-encoded value; and encoding the binary value to obtain the second indication information.

In some embodiments, the bitstream information of the video image frame also includes at least one of: first identification information, where the first identification information is used to indicate whether the high order intra prediction is enabled for the video image frame; second identification information, where the second identification information is used to indicate an index value of an extended angular prediction mode of the high order intra prediction; third identification information, where the third identification information is used to indicate whether the high order intra prediction is disabled for all video image frames; fourth identification information, where the fourth identification information is used to indicate whether the high order intra prediction is enabled for the prediction unit; prediction residual information, where the prediction residual information is used to indicate a residual value between a predicted pixel value and an original pixel value of the prediction unit.

In some embodiments, the processing unit 1001 is further configured to: determine a plurality of candidate primary angular prediction modes corresponding to the prediction unit; determine a plurality of candidate extended angular prediction modes corresponding to the candidate primary angular prediction mode; and determine M candidate angular prediction mode groups according to the plurality of candidate primary angular prediction modes, and the plurality of candidate extended angular prediction modes corresponding to each candidate primary angular prediction mode of the plurality of candidate primary angular prediction modes, where the candidate angular prediction mode group includes a candidate primary angular prediction mode, and a candidate extended angular prediction mode corresponding to the candidate primary angular prediction mode; and M is an integer greater than 1.

In some embodiments, the plurality of candidate primary angular prediction modes corresponding to the prediction unit include: a plurality of most probable modes corresponding to the prediction unit and first P angular prediction modes in an RDO list, where P is a positive integer.

In some embodiments, the plurality of candidate extended angular prediction modes corresponding to the candidate primary angular prediction mode include an angular prediction mode with a same type as the candidate primary angular prediction mode among all angular prediction modes.

In some embodiments, the plurality of candidate primary angular prediction modes corresponding to the prediction unit include: a plurality of most probable modes corresponding to the prediction unit.

In some embodiments, the plurality of candidate extended angular prediction modes corresponding to the candidate primary angular prediction mode include: a plurality of most commonly-used extended angular prediction modes corresponding to the candidate primary angular prediction mode.

In some embodiments, the plurality of most commonly-used extended angular prediction modes corresponding to the candidate primary angular prediction mode are related to a size of a coding unit.

In some embodiments, the high order intra prediction includes a first version and a second version, and a number of the candidate angular prediction mode groups determined by the first version of the high order intra prediction is greater than a number of the candidate angular prediction mode groups determined by the second version of the high order intra prediction.

In some embodiments, the processing unit 1001 is further configured to: calculate a first cost value of each of the M candidate angular prediction mode groups, and add first N candidate angular prediction mode groups with smallest first cost values to an RDO list, where N is a positive integer less than M; and calculate a second cost value of each candidate angular prediction mode group in the RDO list, and select a candidate angular prediction mode group with a smallest second cost value as a target angular prediction mode group, where the target angular prediction mode group includes the target primary angular prediction mode and the target extended angular prediction mode.

In some embodiments, the processing unit 1001 is specifically configured to: judge whether an angular difference between the candidate primary angular prediction mode and the extended angular prediction mode in the candidate angular prediction mode group is greater than a preset threshold; and in a case where the angular difference is greater than the preset threshold, calculate the first cost value of the candidate angular prediction mode group.

In some embodiments, the processing unit 1001 is further configured to: determine a first pixel position of a reference pixel corresponding to the to-be-predicted pixel in the prediction unit according to a pixel position of the to-be-predicted pixel in the prediction unit, the target primary angular prediction mode and a linear projection function; determine a position deviation value of the reference pixel according to the target primary angular prediction mode, the target extended angular prediction mode, and a preset correspondence, where the preset correspondence is a correspondence between a primary angular prediction mode, an extended angular prediction mode, and a position deviation value; determine a second pixel position of the reference pixel according to the first pixel position of the reference pixel and the position deviation value of the reference pixel; and determine a predicted pixel value of the to-be-predicted pixel in the prediction unit according to the second pixel position of the reference pixel, the target primary angular prediction mode, and the target extended angular prediction mode.

In some embodiments, the second pixel position of the reference pixel is a pixel position determined based on a pixel position of the to-be-predicted pixel in the prediction unit, the target primary angular prediction mode, the target extended angular prediction mode and a non-linear projection function.

FIG. 11 is a structural schematic diagram of another communication apparatus, provided in the embodiments of the present disclosure. The communication apparatus may perform the intra prediction decoding method provided in the above method embodiments. As shown in FIG. 11, the communication apparatus includes a communication unit 1102 and a processing unit 1101.

The communication unit 1102 is configured to receive bitstream information of a video image frame, where the bitstream information of the video image frame includes first indication information corresponding to a target primary angular prediction mode and second indication information corresponding to a target extended angular prediction mode, and the target primary angular prediction mode and the target extended angular prediction mode are angular prediction modes for performing a high order intra prediction on a prediction unit in the video image frame.

The processing unit 1101 is configured to determine the target primary angular prediction mode based on the first indication information.

The processing unit 1101 is further configured to determine the target extended angular prediction mode based on the second indication information.

In some embodiments, the second indication information is used to indicate an index value of the target extended angular prediction mode.

In some embodiments, the index value of the target extended angular prediction mode is an index value of the target extended angular prediction mode in a set including all angular prediction modes.

In some embodiments, the processing unit 1101 is further configured to: decode the second indication information to obtain a binary value; perform a decimalization process on the binary value to obtain a to-be-encoded value; determining the index value of the target extended angular prediction mode based on the to-be-encoded value; and determine the target extended angular prediction mode from the set including all angular prediction modes, based on the index value of the target extended angular prediction mode.

In some embodiments, the to-be-encoded value is equal to the index value of the target extended angular prediction mode minus a first value; or in a case where the target extended angular prediction mode belongs to vertical angular prediction modes, the to-be-encoded value is equal to the index value of the target extended angular prediction mode minus a second value; where the second value is greater than the first value, and a difference between the second value and the first value is equal to a total number of horizontal angular prediction modes.

In some embodiments, the first value is equal to 2, and the second value is equal to 35.

In some embodiments, the index value of the target extended angular prediction mode is an index value of the target extended angular prediction mode in a set including a plurality of most commonly-used extended angular prediction modes corresponding to the target primary angular prediction mode.

In some embodiments, the bitstream information of the video image frame also includes at least one of: first identification information, where the first identification information is used to indicate whether the high order intra prediction is enabled for the video image frame; second identification information, where the second identification information is used to indicate an index value of an extended angular prediction mode of the high order intra prediction; third identification information, where the third identification information is used to indicate whether the high order intra prediction is disabled for all video image frames; fourth identification information, where the fourth identification information is used to indicate whether the high order intra prediction is enabled for the prediction unit; prediction residual information, where the prediction residual information is used to indicate a residual value between a predicted pixel value and an original pixel value of the prediction unit.

In some embodiments, the processing unit 1101 is further configured to: determine a first pixel position of a reference pixel corresponding to the prediction unit according to a pixel position of the prediction unit, the target primary angular prediction mode and a linear projection function; determine a position deviation value of the reference pixel according to the target primary angular prediction mode, the target extended angular prediction mode, and a preset correspondence, where the preset correspondence is a correspondence between a primary angular prediction mode, an extended angular prediction mode, and a position deviation value; determine a second pixel position of the reference pixel according to the first pixel position of the reference pixel and the position deviation value of the reference pixel; and determine a predicted pixel value of the prediction unit according to the second pixel position of the reference pixel, the target primary angular prediction mode, and the target extended angular prediction mode.

In some embodiments, the processing unit 1101 is further configured to: determine a residual value in the bitstream information of the video image frame; and determine an original pixel value of the video image frame according to the predicted pixel value of the prediction unit and the residual value.

In a case of implementing the functions of the integrated modules mentioned above in the form of hardware, the embodiments of the present disclosure provide another possible structure of a communication apparatus involved in the above embodiments. As shown in FIG. 12, the communication apparatus 120 includes a processor 1202 and a bus 1204. Optionally, the communication apparatus may further include a memory 1201; and optionally, the communication apparatus may further include a communication interface 1203.

The processor 1202 may implement or perform various exemplary logical blocks, modules and circuits described in conjunction with the embodiments of the present disclosure. The processor 1202 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 1202 may also be a combination that implements computing functions, for example, including a combination of one or more microprocessors, a combination of a digital signal processor (DSP) and a microprocessor, or the like.

The communication interface 1203 is configured to connect with other devices via a communication network. The communication network may be an Ethernet, a radio access network, a wireless local area network (WLAN), or the like.

The memory 1201 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 1201 may exist independently of the processor 1202, and the memory 1201 may be connected to the processor 1202 via the bus 1204 and is used for storing instructions or program codes. The processor 1202, when calling and executing the instructions or program codes stored in the memory 1201, is capable of implementing the intra prediction encoding method or the intra prediction decoding method provided in the embodiments of the present disclosure.

As another possible implementation, the memory 1201 may also be integrated with the processor 1202.

The bus 1204 may be an extended industry standard architecture (EISA) bus or the like. Buses 1204 may be divided into address buses, data buses, control buses, and the like. For the convenience of representation, only one thick line is used in FIG. 12 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the intra prediction encoding method or the intra prediction decoding method described in any embodiment of the above embodiments.

Exemplarily, the above-mentioned computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the intra prediction encoding method or the intra prediction decoding method described in any embodiment of the above embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

**Claims**

1. An intra prediction encoding method, **characterized in that** the method is applied to an encoder and the method comprises:

   generating bitstream information of a video image frame, wherein the bitstream information of the video image frame comprises first indication information corresponding to a target primary angular prediction mode and second indication information corresponding to a target extended angular prediction mode, and the target primary angular prediction mode and the target extended angular prediction mode are angular prediction modes for performing a high order intra prediction on a to-be-predicted pixel in a prediction unit in the video image frame; and
   sending the bitstream information of the video image frame to a decoder.

2. The method according to claim 1, wherein the second indication information is used to indicate an index value of the target extended angular prediction mode.

3. The method according to claim 2, wherein the index value of the target extended angular prediction mode is an index value of the target extended angular prediction mode in a set comprising all angular prediction modes.

4. The method according to claim 3, wherein the second indication information is determined by:

   determining a to-be-encoded value according to the index value of the target extended angular prediction mode;
   performing a binarization process on the to-be-encoded value, to obtain a binary value corresponding to the to-be-encoded value; and
   encoding the binary value to obtain the second indication information.

5. The method according to claim 4, wherein the to-be-encoded value is equal to the index value of the target extended angular prediction mode minus a first value; or in a case where the target extended angular prediction mode belongs to vertical angular prediction modes, the to-be-encoded value is equal to the index value of the target extended angular prediction mode minus a second value; wherein the second value is greater than the first value, and a difference between the second value and the first value is equal to a total number of horizontal angular prediction modes.

6. The method according to claim 5, wherein the first value is equal to 2, and the second value is equal to 35.

7. The method according to claim 2, wherein the index value of the target extended angular prediction mode is an index value of the target extended angular prediction mode in a set comprising a plurality of most commonly-used extended angular prediction modes corresponding to the target primary angular prediction mode.

8. The method according to claim 7, wherein the second indication information is determined by:

performing a binarization process on the index value of the target extended angular prediction mode to obtain a binary value corresponding to a to-be-encoded value; and

encoding the binary value to obtain the second indication information.

9. The method according to claim 1, wherein the bitstream information of the video image frame further comprises at least one of:

first identification information, wherein the first identification information is used to indicate whether the high order intra prediction is enabled for the video image frame;

second identification information, wherein the second identification information is used to indicate an index value of an extended angular prediction mode of the high order intra prediction;

third identification information, wherein the third identification information is used to indicate whether the high order intra prediction is disabled for all video image frames;

fourth identification information, wherein the fourth identification information is used to indicate whether the high order intra prediction is enabled for the prediction unit;

prediction residual information, wherein the prediction residual information is used to indicate a residual value between a predicted pixel value and an original pixel value of the to-be-predicted pixel in the prediction unit.

10. The method according to claim 1, wherein the method further comprises:

determining a plurality of candidate primary angular prediction modes corresponding to the prediction unit;

determining a plurality of candidate extended angular prediction modes corresponding to the candidate primary angular prediction mode; and

determining M candidate angular prediction mode groups according to the plurality of candidate primary angular prediction modes, and the plurality of candidate extended angular prediction modes corresponding to each candidate primary angular prediction mode of the plurality of candidate primary angular prediction modes, wherein the candidate angular prediction mode group comprises a candidate primary angular prediction mode, and a candidate extended angular prediction mode corresponding to the candidate primary angular prediction mode; and M is an integer greater than 1.

11. The method according to claim 10, wherein the plurality of candidate primary angular prediction modes corresponding to the prediction unit comprise: a plurality of most probable modes corresponding to the prediction unit and first P angular prediction modes in a rate-distortion optimization (RDO) list, where P is a positive integer.

12. The method according to claim 11, wherein the plurality of candidate extended angular prediction modes corresponding to the candidate primary angular prediction mode comprise an angular prediction mode with a same type as the candidate primary angular prediction mode among all angular prediction modes.

13. The method according to claim 10, wherein the plurality of candidate primary angular prediction modes corresponding to the prediction unit comprise: a plurality of most probable modes corresponding to the prediction unit.

14. The method according to claim 13, wherein the plurality of candidate extended angular prediction modes corresponding to the candidate primary angular prediction mode comprise: a plurality of most commonly-used extended angular prediction modes corresponding to the candidate primary angular prediction mode.

15. The method according to claim 14, wherein the plurality of most commonly-used extended angular prediction modes corresponding to the candidate primary angular prediction mode are related to a size of a coding unit.

16. The method according to claim 10, wherein the high order intra prediction comprises a first version and a second version, and a number of the candidate angular prediction mode groups determined by the first version of the high order intra prediction is greater than a number of the candidate angular prediction mode groups determined by the second version of the high order intra prediction.

17. The method according to claim 10, wherein the method further comprises:

calculating a first cost value of each of the M candidate angular prediction mode groups, and adding first N candidate angular prediction mode groups with smallest first cost values to an RDO list, where N is a positive integer less than M; and

calculating a second cost value of each candidate angular prediction mode group in the RDO list, and selecting a candidate angular prediction mode group with a smallest second cost value as a target angular prediction mode group, wherein the target angular prediction mode group comprises the target primary angular prediction mode and the target extended angular prediction mode.

18. The method according to claim 17, wherein calculating the first cost value of each of the M candidate angular prediction mode groups comprises:

judging whether an angular difference between the candidate primary angular prediction mode and the extended angular prediction mode in the candidate angular prediction mode group is greater than a preset threshold; and in a case where the angular difference is greater than the preset threshold, calculating the first cost value of the candidate angular prediction mode group.

19. The method according to claim 1, wherein the method further comprises:

determining a first pixel position of a reference pixel corresponding to the to-be-predicted pixel in the prediction unit according to a pixel position of the prediction unit, the target primary angular prediction mode and a linear projection function;
determining a position deviation value of the reference pixel according to the target primary angular prediction mode, the target extended angular prediction mode, and a preset correspondence, wherein the preset correspondence is a correspondence between a primary angular prediction mode, an extended angular prediction mode, and a position deviation value;
determining a second pixel position of the reference pixel according to the first pixel position of the reference pixel and the position deviation value of the reference pixel; and
determining a predicted pixel value of the to-be-predicted pixel in the prediction unit according to the second pixel position of the reference pixel, the target primary angular prediction mode, and the target extended angular prediction mode.

20. The method according to claim 19, wherein the preset correspondence is established by:

determining a calculation function for the position deviation value according to a non-linear projection function and the linear projection function;
for each angular prediction mode group, determining the position deviation value corresponding to the angular prediction mode group, according to the pixel position of the to-be-predicted pixel in the prediction unit, the angular prediction mode group, and the calculation function for the position deviation value, wherein the each angular prediction mode group comprises a primary angular prediction mode and an extended angular prediction mode; and
establishing the preset correspondence according to the each angular prediction mode group and the position deviation value corresponding to the each angular prediction mode group.

21. The method according to claim 1, wherein the method further comprises:

determining a second pixel position of a reference pixel corresponding to the to-be-predicted pixel in the prediction unit, according to a pixel position of the to-be-predicted pixel in the prediction unit, the target primary angular prediction mode, the target extended angular prediction mode and a non-linear projection function; and
determining a predicted pixel value of the to-be-predicted pixel in the prediction unit, according to the second pixel position of the reference pixel, the target primary angular prediction mode, and the target extended angular prediction mode.

22. An intra prediction decoding method, **characterized in that** the method is applied to a decoder and the method comprises:

receiving bitstream information of a video image frame, wherein the bitstream information of the video image frame comprises first indication information corresponding to a target primary angular prediction mode and second indication information corresponding to a target extended angular prediction mode, and the target primary angular prediction mode and the target extended angular prediction mode are angular prediction modes for performing a high order intra prediction on a to-be-predicted pixel in a prediction unit in the video image frame;
determining the target primary angular prediction mode based on the first indication information; and

determining the target extended angular prediction mode based on the second indication information.

23. The method according to claim 22, wherein the second indication information is used to indicate an index value of the target extended angular prediction mode.

24. The method according to claim 23, wherein the index value of the target extended angular prediction mode is an index value of the target extended angular prediction mode in a set comprising all angular prediction modes.

25. The method according to claim 24, wherein determining the target extended angular prediction mode based on the second indication information comprises:

decoding the second indication information to obtain a binary value;
performing a decimalization process on the binary value to obtain a to-be-encoded value;
determining the index value of the target extended angular prediction mode based on the to-be-encoded value; and
determining the target extended angular prediction mode from the set comprising all angular prediction modes, based on the index value of the target extended angular prediction mode.

26. The method according to claim 25, wherein the to-be-encoded value is equal to the index value of the target extended angular prediction mode minus a first value; or in a case where the target extended angular prediction mode belongs to vertical angular prediction modes, the to-be-encoded value is equal to the index value of the target extended angular prediction mode minus a second value; wherein the second value is greater than the first value, and a difference between the second value and the first value is equal to a total number of horizontal angular prediction modes.

27. The method according to claim 23, wherein the index value of the target extended angular prediction mode is an index value of the target extended angular prediction mode in a set comprising a plurality of most commonly-used extended angular prediction modes corresponding to the target primary angular prediction mode.

28. The method according to claim 22, wherein the bitstream information of the video image frame further comprises at least one of:

first identification information, wherein the first identification information is used to indicate whether the high order intra prediction is enabled for the video image frame;
second identification information, wherein the second identification information is used to indicate an index value of an extended angular prediction mode of the high order intra prediction;
third identification information, wherein the third identification information is used to indicate whether the high order intra prediction is disabled for all video image frames;
fourth identification information, wherein the fourth identification information is used to indicate whether the high order intra prediction is enabled for the prediction unit;
prediction residual information, wherein the prediction residual information is used to indicate a residual value between a predicted pixel value and an original pixel value of a to-be-predicted pixel in the prediction unit.

29. The method according to claim 28, wherein the method further comprises:

determining a first pixel position of a reference pixel corresponding to the to-be-predicted pixel in the prediction unit according to a pixel position of the to-be-predicted pixel in the prediction unit, the target primary angular prediction mode and a linear projection function;
determining a position deviation value of the reference pixel according to the target primary angular prediction mode, the target extended angular prediction mode, and a preset correspondence, wherein the preset correspondence is a correspondence between a primary angular prediction mode, an extended angular prediction mode, and a position deviation value;
determining a second pixel position of the reference pixel according to the first pixel position of the reference pixel and the position deviation value of the reference pixel; and
determining a predicted pixel value of the to-be-predicted pixel in the prediction unit according to the second pixel position of the reference pixel, the target primary angular prediction mode, and the target extended angular prediction mode.

30. The method according to claim 28, wherein the method further comprises:

determining a second pixel position of a reference pixel corresponding to the to-be-predicted pixel in the prediction unit, according to a pixel position of the to-be-predicted pixel in the prediction unit, the target primary angular prediction mode, the target extended angular prediction mode and a non-linear projection function; and determining a predicted pixel value of the to-be-predicted pixel in the prediction unit, according to the second pixel position of the reference pixel, the target primary angular prediction mode, and the target extended angular prediction mode.

31. The method according to claim 29 or 30, wherein the method further comprises:

determining a residual value in the bitstream information of the video image frame; and determining an original pixel value of the video image frame according to the predicted pixel value of the to-be-predicted pixel in the prediction unit and the residual value.

32. A communication apparatus, **characterized by** comprising: a memory and a processor; wherein the memory is coupled with the processor; the memory is configured to store instructions executable by the processor; and the processor, when executing the instructions, performs the method according to any one of claims 1 to 31.

33. A computer readable storage medium, **characterized in that** the computer readable storage medium has stored computer instructions thereon, and the computer instructions, when executed on a computer, cause the computer to perform the method according to any one of claims 1 to 31.

FIG. 1

$P[c][0]$

$P[0][0]$

$P[2w-1][0]$

α

$P[x_0][y_0]$

β

$x$

$y$

$P[c][2h-1]$

FIG. 2

| | |
|---|---|
| A coding end generates bitstream information of a video image frame | Step 301 |

| | |
|---|---|
| The coding end sends the bitstream information of the video image frame to a decoding end | Step 302 |

FIG. 3

An encoder determines a to-be-encoded value according to the index value of the target extended angular prediction mode — Step 401

The encoder performs a binarization process on the to-be-encoded value, to obtain a binary value corresponding to the to-be-encoded value — Step 402

The encoder encodes the binary value to obtain the second indication information — Step 403

The encoder generates bitstream information of a video image frame — Step 301

The encoder sends the bitstream information of the video image frame to a decoder — Step 302

FIG. 4

An encoder performs a binarization process on the index value of the target extended angular prediction mode, to obtain a binary value corresponding to the to-be-encoded value ⟋ Step 501

The encoder encodes the binary value to obtain the second indication information ⟋ Step 502

The encoder generates bitstream information of a video image frame ⟋ Step 301

The encoder sends the bitstream information of the video image frame to a decoder ⟋ Step 302

FIG. 5

An encoder determines a plurality of candidate primary angular prediction modes corresponding to the prediction unit — Step 601

The encoder determines a plurality of candidate extended angular prediction modes corresponding to the candidate primary angular prediction mode — Step 602

The encoder determines M candidate angular prediction mode groups, according to the plurality of candidate primary angular prediction modes, and the plurality of candidate extended angular prediction modes corresponding to each candidate primary angular prediction mode among the plurality of candidate primary angular prediction modes — Step 603

The encoder calculates a first cost value of each of the M candidate angular prediction mode groups, and adds first N candidate angular prediction mode groups with smallest first cost values to an RDO list — Step 604

The encoder calculates a second cost value of each candidate angular prediction mode group in the RDO list, and selects a candidate angular prediction mode group with a smallest second cost value as a target angular prediction mode group — Step 605

The encoder generates bitstream information of a video image frame — Step 301

The encoder sends the bitstream information of the video image frame to a decoder — Step 302

FIG. 6

An encoder determines a first pixel position of a reference pixel corresponding to the to-be-predicted pixel according to a pixel position of the to-be-predicted pixel in the prediction unit, the target primary angular prediction mode, and a linear projection function — Step 701

The encoder determines a position deviation value of the reference pixel according to the target primary angular prediction mode, the target extended angular prediction mode, and a preset correspondence — Step 702

The encoder determines a second pixel position of the reference pixel according to the first pixel position of the reference pixel and the position deviation value of the reference pixel — Step 703

The encoder determines a predicted pixel value of the to-be-predicted pixel in the prediction unit according to the second pixel position of the reference pixel, the target primary angular prediction mode, and the target extended angular prediction mode — Step 704

FIG. 7

A decoder receives bitstream information of a video image frame — Step 801

The decoder determines a target primary angular prediction mode based on first indication information — Step 802

The decoder determines a target extended angular prediction mode based on second indication information — Step 803

FIG. 8

| A decoder receives bitstream information of a video image frame | Step 801 |

↓

| The decoder determines a target primary angular prediction mode based on first indication information | Step 802 |

↓

| The decoder decodes second indication information, to obtain a binary value | Step 901 |

↓

| The decoder performs a decimalization process on the binary value, to obtain a to-be-encoded value | Step 902 |

↓

| The decoder determines an index value of the target extended angular prediction mode based on the to-be-encoded value | Step 903 |

↓

| The decoder determines a target extended angular prediction mode from the set comprising all angular prediction modes, based on the index value of the target extended angular prediction mode | Step 904 |

↓

| The decoder determines a first pixel position of a reference pixel corresponding to the to-be-predicted pixel, according to a pixel position of the to-be-predicted pixel in the prediction unit, the target primary angular prediction mode and a linear projection function | Step 905 |

↓

| The decoder determines a position deviation value of the reference pixel according to the target primary angular prediction mode, the target extended angular prediction mode, and a preset correspondence | Step 906 |

↓

| The decoder determines a second pixel position of the reference pixel according to the first pixel position of the reference pixel and the position deviation value of the reference pixel | Step 907 |

↓

| The decoder determines a predicted pixel value of the to-be-predicted pixel in the prediction unit according to the second pixel position of the reference pixel, the target primary angular prediction mode, and the target extended angular prediction mode | Step 908 |

↓

| The decoder determines  determines a residual value in the bitstream information of the video image frame | Step 909 |

↓

| The decoder determines an original pixel value of the video image frame according to the predicted pixel value of the to-be-predicted pixel and the residual value | Step 910 |

FIG. 9

Communication apparatus

Processing unit —— 1001

Communication unit —— 1002

FIG. 10

Communication apparatus

Processing unit —— 1101

Communication unit —— 1102

FIG. 11

120

1202          1203

Processor    Communication interface

1204

Bus

Memory

1201

FIG. 12

## INTERNATIONAL SEARCH REPORT

| International application No. |
| --- |
| **PCT/CN2024/084729** |

### A. CLASSIFICATION OF SUBJECT MATTER

H04N 19/159(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, VEN, DWPI, USTXT, WOTXT, EPTXT, JPTXT, IEEE, CNKI, 必应, BING: 帧内, 图像内, 图象内, 图片内, 预测, 编码, 解码, 译码, 压缩, 角度, 二次, 高阶, 2次, 多次, 多阶, 多维, 高维, 函数, 非线性, 曲线, 非直线, 弯曲, High Order Intra Prediction, HOIP, intra, prediction, quadratic, square, high order, high-dimension, function

### C. DOCUMENTS CONSIDERED TO BE RELEVANT

| Category* | Citation of document, with indication, where appropriate, of the relevant passages | Relevant to claim No. |
| --- | --- | --- |
| Y | WO 2022174467 A1 (GUANGDONG OPPO MOBILE TELECOMMUNICATIONS CORP., LTD.) 25 August 2022 (2022-08-25) description, paragraphs [0047]-[0518], and figures 1-13 | 1-17, 21-28, 30-33 |
| Y | CN 113473135 A (PEKING UNIVERSITY) 01 October 2021 (2021-10-01) claim 1, description, paragraphs [0051]-[0116], and figures 2-4 | 1-17, 21-28, 30-33 |
| Y | LIN, Kai et al. "High-Order Intra Prediction for Future Video Coding" *2022 Data Compression Conference (DCC)*, 25 March 2022 (2022-03-25), chapters 1-2 | 1-17, 21-28, 30-33 |
| A | US 2020186796 A1 (GOOGLE LLC) 11 June 2020 (2020-06-11) entire document | 1-33 |
| A | CN 1492688 A (TSINGHUA UNIVERSITY et al.) 28 April 2004 (2004-04-28) entire document | 1-33 |
| A | CN 115834882 A (BEIJING QIYI CENTURY SCIENCE & TECHNOLOGY CO., LTD.) 21 March 2023 (2023-03-21) entire document | 1-33 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 June 2024** | **25 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/084729**

| Patent document cited in search report | | | Publication date (day/month/year) | Patent family member(s) | | | Publication date (day/month/year) |
|---|---|---|---|---|---|---|---|
| WO | 2022174467 | A1 | 25 August 2022 | EP | 4297406 | A1 | 27 December 2023 |
| | | | | JP | 2024511272 | A | 13 March 2024 |
| | | | | MX | 2023009740 | A | 30 August 2023 |
| | | | | US | 2023403392 | A1 | 14 December 2023 |
| | | | | KR | 20230147149 | A | 20 October 2023 |
| CN | 113473135 | A | 01 October 2021 | CN | 113473135 | B | 01 September 2023 |
| US | 2020186796 | A1 | 11 June 2020 | US | 11601644 | B2 | 07 March 2023 |
| | | | | US | 2023199179 | A1 | 22 June 2023 |
| | | | | WO | 2020123053 | A1 | 18 June 2020 |
| CN | 1492688 | A | 28 April 2004 | CN | 1224270 | C | 19 October 2005 |
| CN | 115834882 | A | 21 March 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310807774